(19) Europäisches Patentamt
European Patent Office
Office européen des brevets

(11) EP 4 617 816 A1

(12) **EUROPEAN PATENT APPLICATION**
published in accordance with Art. 153(4) EPC

(43) Date of publication:
**17.09.2025 Bulletin 2025/38**

(21) Application number: **23888691.5**

(22) Date of filing: **07.11.2023**

(51) International Patent Classification (IPC):
***G05D 1/43*** *(2024.01)* ***G05B 13/02*** *(2006.01)*

(52) Cooperative Patent Classification (CPC):
**G05D 1/693; G05B 13/02; G08G 3/00;**
B63B 2035/007; G05D 2107/84; G05D 2109/34

(86) International application number:
**PCT/JP2023/040019**

(87) International publication number:
**WO 2024/101344 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **07.11.2022 JP 2022178478**

(71) Applicant: **KAWASAKI JUKOGYO KABUSHIKI KAISHA**
**Kobe-shi, Hyogo 650-8670 (JP)**

(72) Inventors:
- **OTSUKI Satoshi**
  **Kobe-shi Hyogo 650-8670 (JP)**
- **NAKASHIMA Kenichi**
  **Kobe-shi Hyogo 650-8670 (JP)**
- **HATANAKA Takeshi**
  **Kobe-shi Hyogo 650-8670 (JP)**
- **HATTA Naoki**
  **Kobe-shi Hyogo 650-8670 (JP)**

(74) Representative: **Arnold & Siedsma**
**Bezuidenhoutseweg 57**
**2594 AC The Hague (NL)**

(54) **CONTROL SYSTEM, CONTROL METHOD, AND CONTROL PROGRAM**

(57) A control system 100 includes: a state acquirer 111 that acquires a state of a first mover 1 and a state of a second mover 9; and a trajectory generator 23 that obtains a target trajectory of the first mover 1. The trajectory generator 23 obtains the target trajectory of the first mover 1 based on the state of the first mover 1, the state of the second mover 9 acquired by the state acquirer 111, and a passage rule determined by both the first mover 1 and the second mover 9.

FIG. 3

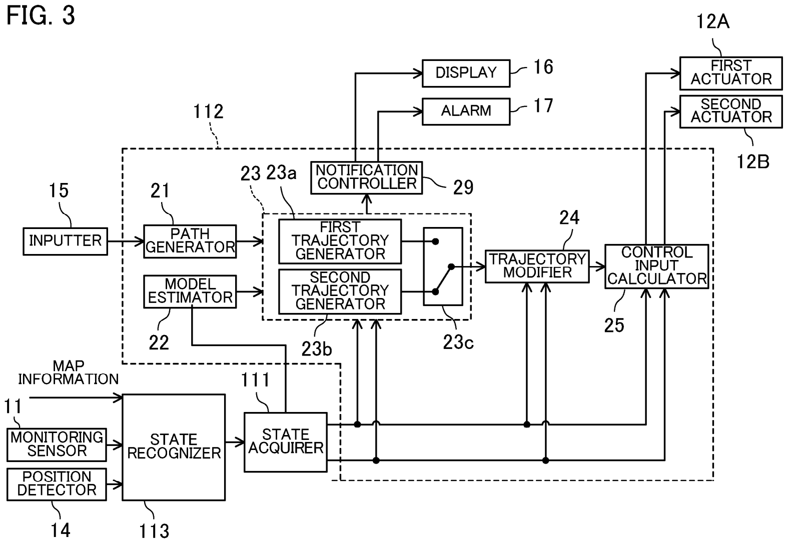




Processed by Luminess, 75001 PARIS (FR)

## Description

FIELD

The technique disclosed here relates to a control system, a control method, and a control program.

BACKGROUND

A control system that controls passage of a mover is known to date. A control system disclosed in Patent Document 1, for example, determines a relationship between a subject mover and other movers while the subject mover is in a departure standby state, and controls retreat, advance, and stop of the subject mover based on the result of the determination.

CITATION LIST

PATENT DOCUMENT

Patent Document 1: Japanese Patent Application Publication No. 2021-60919

SUMMARY

The control system of Patent Document 1 judges a relationship between the subject mover and other movers when the subject mover enters an intersection. That is, the control system judges a relationship between the subject mover and other movers to determine a passage mode of the subject mover at the time when movement of the subject mover needs to be adjusted in relation with other movers.
However, in such control, the subject mover needs to immediately respond to the judgement of the control system. For example, in a case where the control as described above is performed while the subject mover is moving, an inertial force exerted on the moving subject mover makes it difficult for the subject mover to avoid or stop immediately. Accordingly, it is difficult to control the subject mover as expected.
It is therefore an object of the technique disclosed here to accurately control a subject mover.
A control system according to the present disclosure includes: a state acquirer that acquires a state of a first mover and a state of a second mover; and a trajectory generator that obtains a target trajectory of the first mover, wherein the trajectory generator obtains the target trajectory of the first mover based on the state of the first mover and the state of the second mover acquired by the state acquirer and a passage rule determined by both the first mover and the second mover.
A control method according to the present disclosure includes: acquiring a state of a first mover; acquiring a state of a second mover; and obtaining a target trajectory of the first mover, wherein in the obtaining the target trajectory, the target trajectory of the first mover is obtained based on the state of the first mover, the state of the second mover, and a passage rule determined by both the first mover and the second mover.
A control program according to the present disclosure causes a computer to perform the functions of: acquiring a state of a first mover; acquiring a state of a second mover; and obtaining a target trajectory of the first mover, wherein in the function of obtaining the target trajectory, the target trajectory of the first mover is obtained based on the state of the first mover, the state of the second mover, and a passage rule determined by both the first mover and the second mover.
The controller can accurately control the subject mover.
The control method can accurately control the subject mover.
The control program can accurately control the subject mover.

BRIEF DESCRIPTION OF THE DRAWINGS

[FIG. 1] FIG. 1 is an image diagram illustrating an example of a passage situation of a first mover and a second mover.
[FIG. 2] FIG. 2 illustrates a schematic hardware configuration of the first mover.
[FIG. 3] FIG. 3 is a functional block diagram of a control system.
[FIG. 4] FIG. 4 is an explanatory drawing of a model of a mover.
[FIG. 5] FIG. 5 is a schematic view for describing a second rule.
[FIG. 6] FIG. 6 is a flowchart of trajectory generation.
[FIG. 7] FIG. 7 is an image diagram illustrating an example of a target trajectory generated by first trajectory generation.

[FIG. 8] FIG. 8 is an image diagram illustrating an example of a target trajectory generated by second trajectory generation.

[FIG. 9] FIG. 9 is a schematic view illustrating a schematic configuration of a control system according to a variation.

[FIG. 10] FIG. 10 is a schematic view illustrating a schematic configuration of a control system according to a variation.

[FIG. 11] FIG. 11 is a schematic view illustrating a schematic configuration of a control system according to a variation.

[FIG. 12] FIG. 12 is a schematic view illustrating a schematic configuration of a control system according to a variation.

[FIG. 13] FIG. 13 is a schematic view illustrating a schematic configuration of a control system according to a variation.

[FIG. 14] FIG. 14 is an image diagram illustrating an example of a target trajectory generated by second trajectory generation when a mover merges into a fairway.

DESCRIPTION OF EMBODIMENTS

An exemplary embodiment will be described in detail hereinafter with reference to the drawings. FIG. 1 is an image diagram illustrating an example of a passage situation of a first mover 1 and a second mover 9. In FIG. 1, each of the first mover 1 and the second mover 9 passes through a space between two breakwaters W, that is, a narrow path N.

The first mover 1 includes a control system 100. The control system 100 generates a target trajectory of the first mover 1. The "trajectory" herein is an ordered set of positions using time as a parameter. That is, the trajectory represents a chronological change in the position of a mover. The control system 100 generates a trajectory in accordance with a surrounding environment of the first mover 1. The surrounding environment includes passages (i.e., fairways, roads, or the like), obstacles (planimetric features on land or at sea, regardless of natural or artificial, such as buildings, trees, rocks, etc.), disturbances (i.e., tidal current, wind, or the like), and other movers, that is, the second mover 9.

Here, the first mover 1 is a mover for which a target trajectory is generated by the control system 100. The second mover 9 is a mover that is referred to in generating a target trajectory of the first mover 1. In this example, the first mover 1 is a ship. The second mover 9 is also a ship. It should be noted that the second mover 9 is not limited to a mover of the same type as the first mover 1, or may be a mover of different type from the first mover 1.

-Configuration of Mover-

FIG. 2 illustrates a schematic hardware configuration of the first mover 1. The first mover 1 includes a monitoring sensor 11, an actuator, a communicator 13, a position detector 14, an inputter 15, a display 16, an alarm 17, and the control system 100.

The monitoring sensor 11 acquires monitoring information of a predetermined range in an environment where the first mover 1 moves. Examples of the monitoring information can include geographic features, buildings, planimetric features, facilities, and other movers. The monitoring sensor includes at least one of a camera, a light detection and ranging (LiDAR) sensor, an infrared sensor, a laser rangefinder, and a Doppler LiDAR sensor. For example, the camera takes a static image or a moving image. In this example, the monitoring sensor 11 is a LiDAR sensor. The monitoring sensor 11 acquires point group data of objects in a predetermined monitoring area as monitoring information.

The actuator is a driving source of the first mover 1. The actuators may include a first actuator 12A and a second actuator 12B. For example, the first actuator 12A is a main thruster such as a propeller. The second actuator 12B is an auxiliary thruster such as a side thruster. In a case where the first actuator 12A and the second actuator 12B are not distinguished from each other, each of these actuators will be hereinafter referred to simply as an "actuator 12."

The communicator 13 wirelessly communicates with an external device. For example, the external device is the second mover 9 or a control tower. The communicator 13 transmits and receives signals to/from the external device.

The position detector 14 detects a position of the first mover 1. For example, the position detector 14 is a global navigation satellite system (GNSS) receiver or an inertial measurement unit (IMU).

The inputter 15 is a device for a user to input various types of information. The inputter 15 is, for example, a switch, a keyboard, a touch panel of a navigation device, or the like. The display 16 is, for example, a display of a navigation device or the like. The display 16 may display a map, a path, or a trajectory. The alarm 17 is a buzzer or a lamp. The alarm 17 emits sound or light in response to an instruction from the control system 100.

-Details of Controller-

The control system 100 controls the entire first mover 1. The control system 100 generates a trajectory of the first mover 1. Further, the control system 100 executes autonomous driving of the first mover 1. That is, the control system 100 controls the actuators 12 to move the first mover 1. The control system 100 includes a processor 18, a storage 19, and a memory 110. The control system 100 is an example of a computer.

The processor 18 performs various computation processes. For example, the processor 18 is a processor such as a central processing unit (CPU). The processor 18 may be a micro controller unit (MCU), a micro processor unit (MPU), a field programmable gate array (FPGA), a programmable logic controller (PLC), or system LSI, for example.

The storage 19 stores programs and various types of data to be executed by the processor 18. For example, the storage 19 stores a control program 19a. The storage 19 may be, for example, a nonvolatile memory, a hard disc drive (HDD), or a solid state drive (SSD). The memory 110 temporarily stores data or other information. For example, the memory 110 is a volatile memory.

The processor 18 operates the actuators 12 to thereby allow the first mover 1 to perform autonomous driving. The processor 18 generates a target trajectory of the first mover 1. The processor 18 controls the actuators 12 such that the first mover 1 follows the generated target trajectory. At this time, the processor 18 generates a target trajectory based on a passage rule determined by both the first mover 1 and the second mover 9.

FIG. 3 is a functional block diagram of the control system 100. The processor 18 reads the control program 19a from the storage 19 to the memory 110 and develops the control program 19a to thereby perform various functions. Specifically, the processor 18 functions as a state acquirer 111 that acquires a state of the first mover 1 and a state of the second mover 9, and a control calculator 112 that calculates instruction manipulated variables of the actuators 12. In this example, the processor 18 further functions as a state recognizer 113 that recognizes the state of the first mover 1 and the state of the second mover 9.

The state acquirer 111 performs the function of acquiring the state of the first mover 1 and the function of acquiring the state of the second mover 9. The state acquirer 111 may further acquire a state of an environment as well as the state of the first mover 1 and the state of the second mover 9. The state acquirer 111 acquires the state of the first mover 1, the state of the second mover 9, and the state of the environment from the state recognizer 113.

The state recognizer 113 performs the function of obtaining the state of the first mover 1 and the function of obtaining the state of the second mover 9. The state recognizer 113 outputs the state of the first mover 1 and the state of the second mover 9 to the state acquirer 111. The state recognizer 113 may obtain the state of the environment as well as the state of the first mover 1 and the state of the second mover 9, and output these states to the state acquirer 111.

The state recognizer 113 receives map information, information on the second mover 9, a detection result of the monitoring sensor 11, and a detection result of the position detector 14. The map information and the information on the second mover 9 are transmitted from the control tower and stored in the storage 19, for example. The map information includes geographical information. The geographical information includes at least one of roads, passages, fairways, or planimetric features (e.g., buildings, trees, and rocks, whether natural or artificial, located on land or at sea). The geographical information can be information on general maps such as road maps, facility maps, and fairway maps. The map information may include information on an obstacle as well as the geographical information. Examples of an obstacle can include planimetric features, buildings, other movers other than first mover 1 (i.e., the second mover 9), construction sites, rough terrains, shallow water, and aquaculture farms. The information on an obstacle includes at least one of the position, speed, or type of an obstacle. The information on other movers include the type of the other movers, for example.

For example, the state recognizer 113 performs state estimation of the first mover 1 by using a Kalman filter. The state recognizer 113 may perform self-position estimation and environment map generation by using a simultaneous localization and mapping (SLAM) technique. The state recognizer 113 may estimate the size of the second mover 9 or a relative velocity of the second mover 9 to the first mover 1, based on a detection result of the position detector 14. The state recognizer 113 may perform state estimation of an obstacle in an environment. The state recognizer 113 outputs map information including a position of an obstacle and others, information on the first mover 1 such as a current position and a velocity of the first mover 1, information on other movers such as a relative position and a velocity of the second mover 9 to the first mover 1, information on an obstacle such as a relative position and a velocity of the obstacle to the first mover 1, and disturbance information.

That is, the state acquirer 111 acquires map information including a position of an obstacle and others, information on the first mover 1 such as a current position and a velocity of the first mover 1, information on the second mover 9 such as a relative position and a velocity of the second mover 9 to the first mover 1, information on an obstacle such as a relative position and a velocity of the obstacle to the first mover 1, and disturbance information.

The control calculator 112 performs the function of generating a target trajectory of the first mover 1. The control calculator 112 further performs the function of calculating a control input of the first mover 1 based on the target trajectory. Specifically, the control calculator 112 includes a path generator 21 that generates a path of the first mover 1, a model estimator 22 that estimates a model of the second mover 9, a trajectory generator 23 that generates a trajectory of the first mover 1, a trajectory modifier 24 that modifies the trajectory and outputs a target trajectory, a control input calculator 25 that calculates a control input for following the target trajectory, and a notification controller 29 that notifies a user of various types of information through the display 16 or the alarm 17.

The path generator 21 receives a destination from the inputter 15. At this time, the path generator 21 may receive a transit point as well as the destination. In a case where the destination or the transit point is stored in the storage 19, the path generator 21 reads the destination or the transit point from the storage 19. The path generator 21 receives map information, information on the first mover 1, information on the second mover 9, and disturbance information, from the state acquirer 111.

The path generator 21 generates a path from a current position to a destination of the first mover 1, based on the map information. The path generator 21 refers to the map information and generates a path that avoids interference with an obstacle and others. In a case where a fairway, a road, or a passage is set in an environment, the path generator 21 generates a path along the fairway, the road, or the passage. For example, the path generator 21 generates a path by using an A-star search algorithm or an RRT-star algorithm. The path generator 21 sets a way point on the path, that is, a target position relatively close to a current position on the path, and outputs the way point to the trajectory generator 23.

The model estimator 22 estimates a motion model of the second mover 9. Specifically, the model estimator 22 estimates a motion model of the second mover 9 from the type, size, and others of the second mover 9. The model estimator 22 receives the type and size of the second mover 9 from the state acquirer 111. The model estimator 22 outputs a model parameter of the estimated motion model to the trajectory generator 23.

The trajectory generator 23 generates a target trajectory from a current position to the way point of the first mover 1. The trajectory generator 23 includes a first trajectory generator 23a, a second trajectory generator 23b, and a switch 23c. The first trajectory generator 23a and the second trajectory generator 23b generate target trajectories by different methods. The switch 23c switches a generator for use in trajectory generation between the first trajectory generator 23a and the second trajectory generator 23b.

The first trajectory generator 23a generates a target trajectory of the first mover 1 by a predetermined method (e.g., line-of-sight guidance law). In other words, the first trajectory generator 23a generates a target trajectory without consideration of a passage rule of a target described later. Generation of a target trajectory by the first trajectory generator 23a will be hereinafter referred to as first trajectory generation.

The second trajectory generator 23b obtains a target trajectory of the first mover 1 based on the states of the first mover 1 and the second mover 9 and a passage rule determined by both the first mover 1 and the second mover 9. That is, the second trajectory generator 23b generates a target trajectory in consideration of the passage rule in generating a target trajectory of the first mover 1. As a result, the second trajectory generator 23b generates a target trajectory of the first mover 1 that complies with the passage rule.

Here, the passage rule as a target is a rule determined by situations of both the first mover 1 and the second mover 9, in other words, a rule with which passage modes of the first mover 1 and the second mover 9 are determined based on a relationship between the first mover 1 and the second mover 9. For example, in a case where the first mover 1 is a ship, the passage rule includes a rule determined by the port regulations law and other rules. Generation of a target trajectory by the second trajectory generator 23b will be hereinafter referred to as second trajectory generation. In calculating a target trajectory, the second trajectory generator 23b uses the model parameter input from the model estimator 22.

The switch 23c switches a generator to be used to the second trajectory generator 23b in the case of performing trajectory generation in consideration of the passage rule, and otherwise, switches the generator to be used to the first trajectory generator 23a.

The trajectory modifier 24 modifies the target trajectory generated by the trajectory generator 23 as necessary. For example, the trajectory modifier 24 modifies the target trajectory such that the first mover 1 avoids an obstacle. The second trajectory generator 23b simplifies an equation of motion of the first mover 1 and others in calculating a target trajectory. Accordingly, the target trajectory generated by the second trajectory generator 23b is simplified. The trajectory modifier 24 modifies the target trajectory to a more detailed trajectory. The trajectory modifier 24 modifies the target trajectory based on the state quantity of obstacles (including the second mover 9) and the motion model of the first mover 1. Specifically, the trajectory modifier 24 receives map information, information on the first mover 1, information on the second mover 9, and disturbance information, from the state acquirer 111. For example, the trajectory modifier 24 modifies a target trajectory by nonlinear model predictive control (NMPC). Accordingly, a target trajectory that avoids an obstacle while following the target trajectory generated by the trajectory generator 23 as much as possible is generated. The trajectory modifier 24 outputs a target position and a target velocity, as a target trajectory.

The control input calculator 25 calculates a control input corresponding to the target trajectory. The control input calculator 25 calculates an instruction force for causing the first mover 1 to follow the target trajectory. The control input calculator 25 receives map information, information on the first mover 1, information on the second mover 9, and disturbance information, from the state acquirer 111. The control input calculator 25 performs PID control, for example. Control of the control input calculator 25 is not limited to the PID control and may be robust control or other control. At this time, the control input calculator 25 may limit an instruction velocity corresponding to the target trajectory by using a control barrier function (CBF), for example.

In addition, the control input calculator 25 distributes an instruction force to the actuators 12 and calculates an instruction manipulated variable of each of the actuators 12. In a case where each of the actuators 12 is an electric motor, the manipulated variable is a rotation speed of the electric motor or a torque, for example. In a case where each actuator 12 is an engine, the manipulated variable is an accelerator opening angle and a fuel injection amount, for example.

Each actuator 12 operates in accordance with the instruction manipulated variable. The actuator 12 can include a dedicated processor for operating the actuator 12. For example, in the case where the actuator 12 is an electric motor, the actuator 12 further includes a servo amplifier. In this case, the servo amplifier operates the electric motor in accordance with the instruction manipulated variable. As a result, the first mover 1 exhibits a thrust and moves toward a target position.

The notification controller 29 notifies a user of a path, a target trajectory, the type of trajectory generation (i.e., which one of first trajectory generation and second trajectory generation is performed), and so forth. Specifically, the notification controller 29 causes the display 16 to display a path, a target trajectory, the type of trajectory generation, and so forth. For example, the display 16 displays a map with a path and a target trajectory superimposed on the map. At this time, the display 16 displays the type of trajectory generation in a display region. This allows the user to know a traveling state of the first mover 1 and also know whether a trajectory following a passage rule is generated or not. The displayed target trajectory may be a target trajectory modified by the trajectory modifier 24.

Further, in a case where the target trajectory is generated by the second trajectory generator 23b, the notification controller 29 outputs an instruction for notifying the generation to the alarm 17. The alarm 17 issues an alarm in response to the instruction. For example, the alarm 17 emits sound or light as an alarm. This allows the user to know that a trajectory different from the normal trajectory is generated, that is, a target trajectory following the passage rule is generated. The notification controller 29 may control only one of the display 16 and the alarm 17.

-Model Estimation-

Model estimation of the second mover 9 by the model estimator 22 will now be described in detail.

For example, a motion model of a ship is expressed by Equation (1):

$$Mv' + C(v)v + D(v)v + g(\eta) + g0 = \tau + \tau wind + \tau wave \quad \cdot\cdot\cdot (1)$$

where v is a hull velocity, and $\eta$ is a hull position. Mv' is an inertial force, C(v) is a Coriolis force, D(v) is a tidal force, $g(\eta)$ is a buoyancy, g0 is a gravity, $\tau$ is a control input (thrust), $\tau$wind is a wind force, and $\tau$wave is a wave force.

For example, a fluid force (tidal force and wind force) is roughly calculated by a drag coefficient Cd determined by a Reynolds number Re and a Froude number Fr. The Reynolds number Re is determined by a relative velocity to a fluid, a characteristic length of a hull, and a kinematic viscosity coefficient. The Froude number Fr is determined by a characteristic velocity of the hull, the characteristic length of the hull, and a gravitational acceleration. The kinematic viscosity coefficient is generally determined by a fluid (water and air). The gravitational acceleration is generally determined by a current position. Thus, the fluid force is roughly calculated from relative velocities between the ship and a fluid and the size of the hull. The inertial force, the Coriolis force, and the control input are fixed values determined by the type and size of the ship and others, and if the wave force, the buoyancy, and the gravity are ignored, an approximate expression of a motion model is calculated.

In the control system 100, based on a detection result of the position detector 14, the state recognizer 113 recognizes the second mover 9, and obtains a relative velocity of the second mover 9 to the first mover 1 and the size of the second mover 9. The model estimator 22 receives the relative velocity and the size of the second mover 9 from the state acquirer 111. In addition, the model estimator 22 receives the type of the second mover 9 (i.e., the type of the ship) from the control tower. The model estimator 22 obtains a motion model from the relative velocity, the size, and the type of the second mover 9. As described above, the model estimator 22 outputs a model parameter to the trajectory generator 23. The model estimator 22 may receive the relative velocity and the size of the second mover 9 from the control tower.

-Details of Trajectory Generation-

Next, trajectory generation by the second trajectory generator 23b will be described in detail. The second trajectory generator 23b predicts movements of the first mover 1 and the second mover 9 from the current state quantities of the first mover 1 and the second mover 9, and calculates a target trajectory in which the first mover 1 complies with a passage rule with respect to movement of the second mover 9 (i.e., predicted trajectory of the second mover 9). Specifically, the second trajectory generator 23b calculates a target trajectory by solving an optimizing problem that optimizes (i.e., minimizes) an evaluation function based on a deviation between a current position and a target position of the first mover 1 and a control input of the first mover 1, using constraint conditions that the first mover 1 and the second mover 9 move according to predetermined equations of motion and that the first mover 1 and the second mover 9 comply with the passage rule. More specifically, the second trajectory generator 23b calculates a target trajectory by expressing a passage rule by using an index variable to execute an optimal solution search of a mixed-integer quadratic programming problem that simultaneously optimizes the state quantities of the first mover 1 and the second mover 9, which are continuous values, and index variables, which are discrete values. In this example, the second trajectory generator 23b calculates a target trajectory by hybrid model predictive control (HMPC) using, as constraint conditions, an equations of motion of the first mover 1, an equations of motion of the second mover 9, and a passage rule expressed by using index variables.

Specifically, the second trajectory generator 23b calculates an optimal state quantity vector x(k) based on an evaluation function J expressed by Equation (2):

$$J = \sum_{k=1}^{N} w_x \left\| \boldsymbol{x}(k) - \boldsymbol{x}_{ref} \right\|^2 + w_z \| \boldsymbol{z}(k) \|^2 \quad \cdot \cdot \cdot (2)$$

$$s.t. \begin{cases} \boldsymbol{X}(k+1) = A\boldsymbol{X}(k) + B\boldsymbol{Z}(k) + C\boldsymbol{W}(k) \\ E_1\boldsymbol{X}(k) + E_2\boldsymbol{Z}(k) \leq F \end{cases}$$

where $x_{ref}$ is a target state quantity vector, x(k) is a predicted state quantity vector of k steps ahead, z(k) is a control input vector of k steps ahead, and $w_x$ and $w_z$ are evaluation function weighting coefficients. In addition, X(k) is a vector obtained by combining the predicted state quantity vectors x(k) in steps k of k = 0 to N-1, X(k+1) is a vector obtained by combining predicted state quantity vectors x(k+1) in steps k of k = 0 to N-1, and Z(k) is a vector obtained by combining control input vectors z(k) in steps k of k = 0 to N-1. That is, the state quantity vector X(k), the state quantity vector X(k+1), and the control input vector Z(k) are expressed by Equation (3):

$$\begin{aligned} \boldsymbol{X}(k) &= [\boldsymbol{x}^T(0), \cdots, \boldsymbol{x}^T(N-1)]^T \\ \boldsymbol{X}(k+1) &= [\boldsymbol{x}^T(1), \cdots, \boldsymbol{x}^T(N)]^T \\ \boldsymbol{Z}(k) &= [\boldsymbol{z}^T(0), \cdots, \boldsymbol{z}^T(N-1)]^T \end{aligned} \quad \cdot \cdot \cdot (3)$$

The evaluation function J is a function based on a deviation between a current position and a target position of the first mover 1 and the control input of the first model 1. The upper expression in s.t. is an equation of motion of the first mover 1 and another mover. The lower expression in s.t. is a constraint conditional expression. In s.t., A, B, and C are parameters of the equation of motion of the first mover 1 and the second mover 9, and $E_1$ and $E_2$ are coefficient matrices of constraint conditional expressions applied to the state quantity vector X(k) and the control input vector Z(k).

More specifically, with reference to FIG. 4, an equation of motion of a mover is expressed by a nonlinear equation of motion as in the following Expression (4). FIG. 4 is an explanatory drawing of a model of a mover.

$$\begin{cases} \dot{\boldsymbol{\eta}} = R(\psi)\boldsymbol{\nu} \\ M\dot{\boldsymbol{\nu}} + (C(\boldsymbol{\nu}) + D(\boldsymbol{\nu}))\boldsymbol{\nu} = \boldsymbol{\tau} \end{cases} \quad \cdot \cdot \cdot (4)$$

where M is a mass matrix, C(v) is a Coriolis and centrifugal matrix, D(v) is a viscosity matrix, and R(Ψ) is an attitude matrix. A state quantity vector x, a position and posture vector η, a velocity vector v, and a force vector τ are expressed by Equation (5):

$$\begin{cases} \boldsymbol{x} = [\boldsymbol{\eta}, \boldsymbol{\nu}]^T \\ \boldsymbol{\eta} = [x, y, \psi]^T \\ \boldsymbol{\nu} = [u, v, r]^T \\ \boldsymbol{\tau} = [F_X, F_Y, F_N]^T \end{cases} \quad \cdot \cdot \cdot (5)$$

To handle an equation of motion of the mover as a mixed-integer quadratic programming problem, the second trajectory generator 23b linearly approximates the equation of motion of the mover. For example, a kinematic model (an equation of motion for a posture) is approximated by a first-order linearization, and the Coriolis and centrifugal terms of the dynamic model and the nonlinear terms of the damping matrix are neglected.

Further, the second trajectory generator 23b fixes the posture of the first mover 1 at an arbitrary posture ψ0. Suppose the position and the velocity of the first mover 1 are represented by a state quantity vector xi, and a thrust of the first mover 1 is represented by an input vector ui, the equation of motion of the first mover 1 is expressed by Equation (6).

$$\begin{bmatrix}\dot{x}_i\\ \dot{y}_i\\ \dot{u}_i\\ \dot{v}_i\end{bmatrix}=\begin{bmatrix}0&0&\cos\psi_0&-\sin\psi_0\\0&0&\sin\psi_0&\cos\psi_0\\0&0&-\dfrac{d_{xi}}{m_{xi}}&0\\0&0&0&-\dfrac{d_{yi}}{m_{yi}}\end{bmatrix}\begin{bmatrix}x_i\\y_i\\u_i\\v_i\end{bmatrix}+\begin{bmatrix}0&0\\0&0\\\dfrac{1}{m_{xi}}&0\\0&\dfrac{1}{m_{yi}}\end{bmatrix}\begin{bmatrix}X_i\\Y_i\end{bmatrix}=A_i\boldsymbol{x}_i+B_i\boldsymbol{u}_i \quad \cdots (6)$$

where position ($x_i$, $y_i$), velocity ($\dot{x}_i$, $\dot{y}_i$), *and* thrust ($X_i$, $Y_i$).

Regarding the second mover 9, the second trajectory generator 23b regards the velocity as constant and handles the velocity as an exogenous vector w. An equation of motion of the second mover 9 is expressed by Equation (7):

$$\begin{bmatrix}\dot{x}_j\\ \dot{y}_j\end{bmatrix}=\begin{bmatrix}0&0\\0&0\end{bmatrix}\begin{bmatrix}x_j\\y_j\end{bmatrix}+\begin{bmatrix}v_{xj}\\v_{yj}\end{bmatrix}=A_j\boldsymbol{x}_j+\boldsymbol{w}_j \quad \cdots (7)$$

Thus, the entire model of the first mover 1 and the second mover 9 is expressed by the equation of motion of Equation (8):

$$\begin{bmatrix}\dot{\boldsymbol{x}}_i\\ \dot{\boldsymbol{x}}_j\end{bmatrix}=\begin{bmatrix}A_i&\boldsymbol{0}\\\boldsymbol{0}&\boldsymbol{0}\end{bmatrix}\begin{bmatrix}\boldsymbol{x}_i\\\boldsymbol{x}_j\end{bmatrix}+\begin{bmatrix}B_i\\\boldsymbol{0}\end{bmatrix}\boldsymbol{u}_i+\begin{bmatrix}\boldsymbol{0}\\\boldsymbol{I}_2\end{bmatrix}\boldsymbol{w}_j=A_c\boldsymbol{x}+B_c\boldsymbol{u}+C_c\boldsymbol{w} \quad \cdots (8)$$

where $I_2$ is a 2×2 unit matrix.

Suppose the velocity of the second mover 9 is not regarded as constant and is assumed to have the same dynamics as the first mover 1, the equation of motion of the second mover 9 has the same form as the equation of motion of the first mover 1 and is expressed by Equation (9):

$$\begin{bmatrix}\dot{x}_j\\ \dot{y}_j\\ \dot{u}_j\\ \dot{v}_j\end{bmatrix}=\begin{bmatrix}0&0&\cos\psi_0&-\sin\psi_0\\0&0&\sin\psi_0&\cos\psi_0\\0&0&-\dfrac{d_{xj}}{m_{xj}}&0\\0&0&0&-\dfrac{d_{yj}}{m_{yj}}\end{bmatrix}\begin{bmatrix}x_j\\y_j\\u_j\\v_j\end{bmatrix}+\begin{bmatrix}0&0\\0&0\\\dfrac{1}{m_{xj}}&0\\0&\dfrac{1}{m_{yj}}\end{bmatrix}\begin{bmatrix}X_j\\Y_j\end{bmatrix}=A_j\boldsymbol{x}_j+B_j\boldsymbol{u}_j \quad \cdots (9)$$

In this case, the entire model of the first mover 1 and the second mover 9 is expressed by the equation of motion of Equation (10):

$$\begin{bmatrix}\dot{\boldsymbol{x}}_i\\ \dot{\boldsymbol{x}}_j\end{bmatrix}=\begin{bmatrix}A_i&0\\0&A_j\end{bmatrix}\begin{bmatrix}\boldsymbol{x}_i\\\boldsymbol{x}_j\end{bmatrix}+\begin{bmatrix}B_i&0\\0&B_j\end{bmatrix}\begin{bmatrix}\boldsymbol{u}_i\\\boldsymbol{u}_j\end{bmatrix}+\begin{bmatrix}0\\0\end{bmatrix}=A_c\boldsymbol{x}+B_c\boldsymbol{u} \quad \cdots (10)$$

where an input vector u is a vector obtained by combining an input vector ui of the first mover 1 and an input vector uj of the second mover 9. That is, the input vector u is expressed by Equation (11):

$$\begin{aligned}\boldsymbol{u}&=[\boldsymbol{u}_i,\boldsymbol{u}_j]\\\boldsymbol{u}_i&=[X_i,Y_i]\\\boldsymbol{u}_j&=[X_j,Y_j]\end{aligned} \quad \cdots (11)$$

The second trajectory generator 23b sets satisfaction of the equation of motion of Equation (8) or Equation (10) as a constraint condition.

A constraint condition related to a passage rule will now be described. The second trajectory generator 23b further sets, as a constraint condition, a passage rule for a case where a mover passes through a narrow path N between two breakwaters W as illustrated in FIG. 1.

The second trajectory generator 23b represents a passage rule as an inequality constraint condition by a state quantity and an index variable. For example, the second trajectory generator 23b considers a first rule and a second rule as the passage rule. The first rule is that the first mover 1 and the second mover 9 are not present in a danger area A (see FIG. 1) at the same time. The second rule is that the first mover 1 is located outside a no-entry area E, that is, in a safe area B (see FIG. 1).

Specifically, as illustrated in FIG. 1, the danger area A is an area including the narrow path N, and the no-entry area E is an area set for the breakwaters W. For convenience of description, a Y axis is set to pass through the centroids of planar shapes of the breakwaters W and extend in the longitudinal direction of the breakwaters W, and an X axis is set to be orthogonal to the Y axis and pass through the center of the narrow path N. The no-entry area E is an area surrounding the breakwaters W and an area in which the distance to the breakwaters W is less than a predetermined safe distance.

Regarding the first rule, an index variable indicating whether the mover is located in the danger area A or not, is defined as in Equation (12):

$$\gamma(k) = \begin{cases} 1 \text{ if } \textit{mover is located in danger area A at time k} \\ 0 \text{ if } \textit{mover is located out of danger area A at time k} \end{cases} \quad \cdots (12)$$

The danger area A illustrated in FIG. 1 is an arbitrary protruding area enclosed by straight lines. The danger area A is defined as in Equation (13) below. It should be noted that x = (x, y) is a state quantity vector, and ai is a normal vector of a boundary of the protruding area. That is, the danger area A is represented as an intersection of half-spaces defined by h(x) ≥ 0.

$$\text{danger area } A := \left\{ \boldsymbol{x} \middle| \min_{i=1\cdots m} h_i(\boldsymbol{x}) \geq 0 \right\} \quad \cdots (13)$$
$$h_i(\boldsymbol{x}) = a_i^T \boldsymbol{x} + b_i$$

For each half-space $h_i(x) \geq 0$, an index variable $\delta_{dzi}$ is defined as follows:

$$[\delta_{dzi}(k) = 1] \leftrightarrow [h_i(\boldsymbol{x}(k)) \geq 0] \quad \cdots (14)$$

According to Logical Expression (14), in the case of $h_i(x) \geq 0$, $\delta_{dzi}(k)$ is 1, and otherwise, $\delta_{dzi}(k)$ is 0.

Then, the index variable y(k) in Expression (12) can be expressed by Logical Expression (15):

$$[\gamma(k) = 1] \leftrightarrow \bigwedge_{i=1}^{m} [\delta_{dzi}(k) = 1] \quad \cdots (15)$$

Then, Logical Expression (14) is approximately expressed as Expression (16):

$$h_{imin}(1 - \delta_{dzi}(k)) \leq h_i\big(\boldsymbol{x}(k)\big) \leq h_{imax}\delta_{dzi}(k) + (\delta_{dzi}(k) - 1)\varepsilon \quad \cdots (16)$$

In a case where the absolute values of $h_{imax}$ and $h_{imin}$ are sufficiently large and ε is sufficiently small, Expression (16) approximately expresses Logical Expression (14).

Logical Expression (15) is converted to an inequality of index variables y(k), $\delta_{dz1}(k)$, and $\delta_{dz2}(k)$ by substitution.

Thus, a propositional logic [γ(k) = 1] that the mover is present in the danger area A is converted to the following linear inequality.

$$A_h \boldsymbol{x}(k) + B_h \boldsymbol{z}(k) \leq b_h \quad \cdots (17)$$

It should be noted that the vector z(k) is a stack vector of an index variable including index variable $\delta_{dz1}$, ..., $\delta_{dzm}$, and γ.

In addition, the first rule requires that the first mover 1 and the second mover 9 are not present in the danger area A at the same time, and this requirement is expressed by Expression (18):

$$\gamma_0(k) + \gamma_1(k) + \gamma_2(k) + \cdots \leq 1 \quad \cdot\cdot\cdot (18)$$

It should be noted that regarding the subscript of the index variable γ, 0 represents the first mover 1, and 1, 2, ... represent different second movers 9.

Further, to enhance efficiency of calculation, the second trajectory generator 23b limits the search range for a target trajectory. Specifically, the second trajectory generator 23b adds a condition for trajectory calculation to exclude an unrealistic trajectory from the search range. Specifically, the second trajectory generator 23b introduces a new index variable φ(k) that becomes one when y(k) changes.

$$\phi(k) = \begin{cases} 1 & \text{if} \quad \gamma(k) \neq \gamma(k+1) \\ 0 & \text{if} \quad \gamma(k) = \gamma(k+1) \end{cases} \quad \cdot\cdot\cdot (19)$$

Expression (19) is expressed as the following Logical Expression (20) by using an exclusive OR.

$$[\phi(k) = 1] \leftrightarrow [\gamma(k) = 1] \oplus [\gamma(k+1) = 1] \quad \cdot\cdot\cdot (20)$$

Logical Expression (20) is converted to a linear inequality by substitution.

As long as the mover is normally driven, the mover does not enter and exit the danger area A many times. That is, the index variable y(k) normally changes only twice, that is, when the mover enters the danger area A and when the mover exits the danger area A. Then, regarding the index variable φ(k), the following Inequality (21) is set.

$$\phi(0) + \phi(1) + \phi(2) + \cdots + \phi(N-1) \leq 2 \quad \cdot\cdot\cdot (21)$$

Consequently, a constraint conditional expression for enhancing calculation efficiency is a combination of Expressions (20) and (21). The second trajectory generator 23b sets Expressions (20) and (21) as constraint conditions to thereby search for a target trajectory among realistic trajectories of the first mover 1.

Subsequently, a constraint conditional expression related to a second rule will be described. FIG. 5 is a schematic view for describing a second rule. As illustrated in FIG. 5, the safe area B is an arbitrary protruding area enclosed by straight lines. The safe area B is defined as in the following Expression (22). It should be noted that the state quantity vector x = (x, y), and $c_i$ is a normal vector of a boundary of the protruding area.

$$\text{safe area } B := \left\{ \boldsymbol{x} \mid \max_{i=1\cdots n} g_i(\boldsymbol{x}) \geq 0 \right\} \quad \cdot\cdot\cdot (22)$$
$$g_i(\boldsymbol{x}) = c_i^T \boldsymbol{x} + d_i$$

A condition when the first mover 1 is located in the safe area B, that is, the constraint conditional expression related to the second rule is approximately expressed by the following inequality:

$$\begin{cases} c_i^T \boldsymbol{x} + d_i + M\delta_{bi} \geq 0, \quad i = 1, \cdots, n \\ \delta_{b1} + \cdots + \delta_{bn} \leq n - 1 \end{cases} \quad \cdot\cdot\cdot (23)$$

The constraint conditional expression related to the first rule, the constraint conditional expression related to the second rule, and the constraint conditional expression for enhancing calculation efficiency described above are summarized in the form of constraint conditional expression of s.t. in Equation (2).

-Flow of Trajectory Generation-

Thereafter, trajectory generation by the control system 100 will be more specifically described with reference to a flowchart of trajectory generation of FIG. 6.

First, in step S101, the trajectory generator 23 determines whether the first mover 1 is located in a restricted area C or not. The restricted area C is an area to which the passage rule is applied, that is, an area wider than the danger area A and is an area where the mover is driven in preparation for driving in compliance with the passage rule. The restricted area C is an area including the danger area A and the no-entry area E. The trajectory generator 23 determines whether the first mover 1 is located in the restricted area C or not, based on map information and a current position of the first mover 1.

If the first mover 1 is located outside the restricted area C, the trajectory generator 23 performs first trajectory generation in step S102. Specifically, the first trajectory generator 23a generates a target trajectory of the first mover 1, and the switch 23c outputs the target trajectory generated by the first trajectory generator 23a. The trajectory modifier 24 modifies the target trajectory output from the trajectory generator 23, and generates a final target trajectory. The notification controller 29 causes the display 16 to display generation of the target trajectory by first trajectory generation, a path, and the target trajectory.

Thereafter, in step S103, the control input calculator 25 calculates a control input corresponding to the target trajectory. The control input calculator 25 calculates an instruction manipulated variable of each of the actuators 12. Each actuator 12 operates in accordance with the instruction manipulated variable. Consequently, the first mover 1 moves to follow the target trajectory.

On the other hand,, if the first mover 1 is located in the restricted area C, the trajectory generator 23 determines whether the second mover 9 is located in a warning area or not in step S104. The warning area is an area where the second mover 9 is likely to enter the danger area A. In this example, the warning area coincides with the restricted area C. The trajectory generator 23 determines whether the second mover 9 is located in the warning area or not, based on map information and a current position of the second mover 9.

If the second mover 9 is located outside the warning area, the trajectory generator 23 performs first trajectory generation in step S102. That is, even in a case where the first mover 1 is located in the restricted area C, if the second mover 9 is not present in the warning area, a passage rule based on the relationship with the second mover 9 does not need to be taken into consideration. Thus, the trajectory generator 23 generates a target trajectory by the first trajectory generation.

On the other hand, if the second mover 9 is located in the warning area, the model estimator 22 estimates a model of the second mover 9 in step S105. Thereafter, in step S106, the trajectory generator 23 performs second trajectory generation. Specifically, the second trajectory generator 23b generates a target trajectory of the first mover 1, and the switch 23c outputs the target trajectory generated by the second trajectory generator 23b.

Subsequently, in step S103, the control input calculator 25 calculates a control input corresponding to the target trajectory. This process is performed in the manner described above.

The control system 100 repeats such a process at a predetermined control cycle during autonomous driving of the first mover 1 to thereby generate, that is, update, a target trajectory as needed. The control system 100 predicts movements of the first mover 1 and the second mover 9 during movement of the first mover 1 to generate a target trajectory that complies with a passage rule, and thus, the control system 100 can perform autonomous driving of the first mover 1 previously prepared for movement of the second mover 9. Since the control system 100 updates the target trajectory as needed, the control system 100 can sequentially predict movement of the second mover 9 and generate a target trajectory in accordance with the movement of the second mover 9.

FIG. 7 is an image diagram illustrating an example of a target trajectory generated by first trajectory generation. FIG. 8 is an image diagram illustrating an example of a target trajectory generated by second trajectory generation. In FIGS. 7 and 8, numbers added to the first mover 1 or the second mover 9 represent a chronological order, and can also be regarded as the number of steps k. That is, the first mover 1 assigned with 0 is the first mover 1 at step k = 0, and the first mover 1 assigned with 1 is the first mover 1 at step k = 1. For example, in a case where the first mover 1 is located outside the restricted area C, or a case where the first mover 1 is located in the restricted area C but the second mover 9 is not located in the warning area, the trajectory generator 23 generates a target trajectory in which the first mover 1 passes in the narrow path N without interference with the breakwaters W as illustrated in FIG. 7, by the first trajectory generation. That is, the trajectory generator 23 generates the target trajectory in which the first mover 1 passes in the narrow path N without consideration of the second mover 9.

On the other hand, in a case where the first mover 1 is located in the restricted area C and the second mover 9 is located in the warning area, the trajectory generator 23 generates a target trajectory in which the first mover 1 passes in the narrow path N in compliance with the passage rule as illustrated in FIG. 8, by second trajectory generation. That is, the trajectory generator 23 predicts movement of the second mover 9 and generates a target trajectory in which the first mover 1 complies with the passage rule in relation to the second mover 9. The target trajectory of FIG. 8 is generated by the second trajectory generation, and is a target trajectory in which the posture of the first mover 1 is fixed. The target trajectory of FIG. 8 is modified by the trajectory modifier 24 to be a final target trajectory.

Specifically, the second trajectory generator 23b searches for an appropriate target trajectory in which the first mover 1 complies with the passage rule in relation to the second mover 9, based on prediction of movements of the first mover 1 and the second mover 9. As shown in the example of FIG. 8, in a case where it is difficult for the first mover 1 to pass through the danger area A before the second mover 9 enters the danger area A, the second trajectory generator 23b generates a target trajectory of the first mover 1 in which entry of the first mover 1 into the danger area A is suspended until the second mover 9 exits the danger area A, and after second mover 9 exits the danger area A, the first mover 1 enters the danger area A. Since the danger area A includes the narrow path N, the second mover 9 and the first mover 1 sequentially pass through the narrow path N one by one in this order. Since the generated target trajectory complies with the passage rule, the first mover 1 naturally complies with the passage rule by moving along the target trajectory.

More specifically, since the second trajectory generator 23b predicts standby of entry into the danger area A, the second trajectory generator 23b adjusts the velocity of the first mover 1 until the first mover 1 reaches the danger area A so that the first mover 1 can enter the danger area A without suddenly stopping or starting. Accordingly, the first mover 1 moves with a smooth velocity change, and enters the danger area A at a timing at which the first mover 1 complies with the passage rule. Consequently, the first mover 1 can pass through the danger area A with smooth operation without a sharp turn, a sudden stop, or the like. Since an immediate response such as a sharp turn is not required for the first mover 1, even the first mover 1 on which a larger inertial force exerts can be easily controlled as expected.

In the manner described above, the trajectory generator 23 predicts movements of the first mover 1 and the second mover 9 in consideration of dynamic characteristics (i.e., characteristics of the movers including time elements, such as an inertial force or a velocity) of the first mover 1 and the second mover 9, and generates a target trajectory in which the first mover 1 complies with a passage rule in relation to the second mover 9. Thus, when the first mover 1 moves along the generated target trajectory, the first mover 1 passes while naturally complying with the passage rule. As a result, a sharp turn or a sudden stop of the first mover 1 is avoided, and thus, it is possible to allow the first mover 1 to pass in compliance with the passage rule as expected.

In addition, since a target trajectory is generated based on prediction of movements of the first mover 1 and the second mover 9, the target trajectory that complies with a passage rule is generated before the first mover 1 reaches the danger area A. The first mover 1 can adjust a velocity and a moving direction before the first mover 1 reaches the danger area A, and can smoothly enter and pass through the danger area A at a timing at which the first mover 1 complies with a passage rule.

Specifically, if a situation of the second mover 9 is determined at the time when the first mover 1 reaches the danger area A or approaches the danger area A and it is determined whether the first mover 1 enters the narrow path N or waits, the first mover 1 might fail to immediately respond to a control instruction because of an inertial force exerted on the first mover 1 or the like. In other cases, if control is executed such that when the first mover 1 always stops when reaching the danger area A and enters the danger area A after waiting for passage of the second mover 9, the first mover 1 and the second mover 9 might wait for entry in the danger area A and be stuck when the second mover 9 also executes similar control. On the other hand, the trajectory generator 23 generates a target trajectory of the first mover 1 in accordance with predicted movement of the second mover 9. The first mover 1 can adjust the velocity or the moving direction in advance in accordance with predicted movement of the second mover 9. Accordingly, the first mover 1 can respond to movement of the second mover 9 in advance, and thus, does not need to respond immediately. In addition, in a case where the second mover 9 is likely to enter the danger area A (i.e., narrow path N) before the first mover 1, for example, the trajectory generator 23 generates a target trajectory in which the first mover 1 enters the danger area A after waiting for passage of the second mover 9 through the danger area A. On the other hand, the second mover 9 is likely to wait for entry into the danger area A, the trajectory generator 23 generates a target trajectory in which the first mover 1 enters the danger area A before the second mover 9 and passes through the danger area A. In this manner, the trajectory generator 23 changes the target trajectory in accordance with movement of the second mover 9. This avoids a state where both the first mover 1 and the second mover 9 stop to be stuck.

Since the trajectory generator 23 sequentially generates a target trajectory during movement of the first mover 1, movement prediction of the first mover 1 and the second mover 9 are updated as needed, and the target trajectory is also updated as needed. Accordingly, the target trajectory is updated in accordance with actual movements of the first mover 1 and the second mover 9. In either case where the second mover 9 performs autonomous driving or manual driving, the first mover 1 can perform autonomous driving in conformity with a passage rule in accordance with movement of the second mover 9. In this manner, since the first mover 1 and the second mover 9 comply with a common passage rule, the first mover 1 that performs autonomous driving and the second mover 9 that performs manual driving can coexist in the same space.

Further, the trajectory generator 23 calculates a target trajectory of the first mover 1 based on an equation of motion of the first mover 1 and an equation of motion of the second mover 9, and uses a condition that both the first mover 1 and the second mover 9 comply with a passage rule as a constraint condition in calculating the target trajectory. Accordingly, the trajectory generator 23 can generate the target trajectory in which the first mover 1 complies with a passage rule. More specifically, the trajectory generator 23 expresses a passage rule as a constraint conditional expression by using an index variable, and calculates a target trajectory of the first mover 1 based on an equation of motion of the first mover 1, an equation of motion of the second mover 9, and a constraint conditional expression. The trajectory generator 23 expresses a passage rule by using an index variable to thereby achieve calculation of a target trajectory in compliance with the passage rule. More specifically, the trajectory generator 23 calculates a target trajectory by executing an optimal solution search of a mixed-integer quadratic programming problem that simultaneously optimizes state quantities of the first mover 1 and the second mover 9, which are continuous values, and index variables, which are discrete values. The trajectory generator 23 can achieve calculation of a target trajectory by obtaining a target trajectory by the optimal solution search of the mixed-integer quadratic programming problem and setting a passage rule as a constraint condition of the mixed-integer quadratic programming problem.

Further, the trajectory generator 23 predicts movement of the second mover 9 based on a dynamic characteristic of the second mover 9. Accordingly, the trajectory generator 23 can predict movement of the second mover 9 in consideration of a difference in behavior due to the size of the second mover 9 and other reasons. This enhances accuracy of movement prediction of the second mover 9. Consequently, accuracy of a target trajectory of the first mover 1 can be enhanced.

In searching for an appropriate target trajectory of the first mover 1, the trajectory generator 23 limits the search range to a realistic trajectory of the first mover 1. Accordingly, the trajectory generator 23 reduces the amount of calculation of the target trajectory. Specifically, the trajectory generator 23 reduces the amount of calculation of the target trajectory by excluding, from the search range, a trajectory in which the total number of times of entry of the first mover 1 into the danger area A and exit of the first mover 1 from the danger area A.

<<OTHER EMBODIMENTS>>

In the foregoing section, the embodiment has been described as an example of the technique disclosed in the present application. The technique disclosed here, however, is not limited to this embodiment, and is applicable to other embodiments obtained by changes, replacements, additions, and/or omissions as necessary. Components described in the above embodiment may be combined as a new exemplary embodiment. Components provided in the accompanying drawings and the detailed description can include components unnecessary for solving problems as well as components necessary for solving problems in order to exemplify the technique. Therefore, it should not be concluded that such unnecessary components are necessary only because these unnecessary components are included in the accompanying drawings or the detailed description.

For example, the first mover 1 and the second mover 9 are not limited to the example described above. For example, each of the first mover 1 and the second mover 9 is not limited to a ship, and may be a vehicle, an autonomous robot (e.g., a carrier pallet), or a flying device (e.g., a drone), for example. The first mover 1 may be any mover as long as the mover can perform autonomous driving. The second mover 9 is not limited to a mover that performs autonomous driving, and may be a mover that is driven only manually. Alternatively, the second mover 9 may be a living thing such as a human. For example, the second mover 9 may be a pedestrian passing on a road, or a worker or the like who works in a site. The number of the second movers 9 is not limited to the example in FIG. 1 and may be any number.

The configuration of the control system 100 is not limited to the configuration described above. It is sufficient for the control system 100 to include at least the state acquirer 111 and the trajectory generator 23. That is, it is sufficient that the control system 100 acquires states of the first mover 1 and the second mover 9 and generates a target trajectory based on the acquired states. The control system 100 may not perform calculation of a control input and other operations. Calculation of a control input based on a target trajectory, control of the actuators 12, and other operations may be performed by a device other than the control system 100. The control system 100 may not be included in the first mover 1. For example, the control system 100 may be located outside the first mover 1 and the second mover 9.

For example, as illustrated in FIG. 9, a control tower 150 that communicates with the first mover 1 and the second mover 9 may include the control system 100. The control system 100 includes at least the state acquirer 111 and the trajectory generator 23. The first mover 1 includes at least the state recognizer 113 and the control input calculator 25. That is, the first mover 1 estimates states of the first mover 1 and the second mover 9 by the state recognizer 113, and transmits an estimation result to the control tower 150. In the control tower 150, the state acquirer 111 acquires the estimation result, and the trajectory generator 23 generates a target trajectory. The control tower 150 transmits the generated target trajectory to the first mover 1. In the first mover 1, the trajectory modifier 24 modifies received activation, the control input calculator 25 calculates a control input, and the actuators 12 operate in accordance with the control input. This configuration also makes it possible to allow the first mover 1 to pass in compliance with a passage rule.

Alternatively, as illustrated in in FIG. 10, the second mover 9 may also include the state recognizer 113 instead of the configuration of FIG. 9. In this case, the state recognizer 113 of the first mover 1 estimates a state of the first mover 1, and the state recognizer 113 of the second mover 9 estimates a state of the second mover 9. The state acquirer 111 of the control system 100 acquires an estimation result of the state of the first mover 1 from the state recognizer 113 of the first mover 1 and acquires an estimation result of the state of the second mover 9 from the state recognizer 113 of the second mover 9.

Alternatively, as illustrated in FIG. 11, the control tower 150 may include the state recognizer 113 of the second mover 9 in FIG. 10. In this case, the state recognizer 113 of the first mover 1 estimates a state of the first mover 1, and the state recognizer 113 of the control tower 150 estimates a state of the second mover 9. The state acquirer 111 of the control system 100 acquires an estimation result of the state of the first mover 1 from the state recognizer 113 of the first mover 1 and acquires an estimation result of the state of the second mover 9 from the state recognizer 113 of the state acquirer 111 itself.

Alternatively, as illustrated in FIG. 12, the first mover 1 may include the control system 100, and the second mover 9 may include the state recognizer 113 that estimates a state of the second mover 9. The configuration of the control system 100 is substantially the same as the configuration illustrated in FIG. 1. It should be noted that the state recognizer 113 of the control system 100 estimates a state of the first mover 1. A state of the second mover 9 is estimated by the state recognizer 113 of the second mover 9. The state acquirer 111 of the control system 100 acquires an estimation result of the state of the first mover 1 from the state recognizer 113 of the control system 100, and acquires an estimation result of the state of the second mover 9 from the second mover 9 by way of the control tower 150.

Alternatively, as illustrated in FIG. 13, the control tower 150 may include the control system 100, and the first mover 1 may include at least the control input calculator 25. The control system 100 in FIG. 13 includes the state recognizer 113, unlike the control system 100 in FIG. 9. That is, the state recognizer 113 in the control system 100 of the control tower 150 estimates the statues of the first mover 1 and the second mover 9.

The method for generating a target trajectory is not limited to the method described above. For example, a target trajectory that complies with a passage rule may be output by using a model leaned by machine learning, with a state quantity of the first mover 1 and a state quantity of the second mover 9 used as inputs. Alternatively, in the case of calculating a target trajectory, the target trajectory may be calculated by a method other than an optimal solution search of a mixed-integer quadratic programming problem.

In searching for an optimum solution of a target trajectory, the search range may not be limited. In the case where the search range is limited, the limited range can be arbitrarily set. For example, in the case where the number of times of entry and exit of the first mover 1 into/from the danger area A is limited as described above, the number may not be two and may be three or more.

A passage rule of a target in generating a target trajectory is not limited to the rule described above. The passage rule can be any rule as long as the passage rule is determined by both the first mover 1 and the second mover 9. For example, regarding the passage rule described above, the first rule is that the first mover 1 and the second mover 9 are not present in a predetermined area at the same time, and is determined by both the first mover 1 and the second mover 9. That is, in the passage rule, the second rule may be omitted.

The rule determined by both the first mover 1 and the second mover 9 is not limited to the first rule. The rule determined by both the first mover 1 and the second mover 9 may be a rule in which the first mover 1 and the second mover 9 are separated from each other at a given distance or more. For example, the passage rule may further include a third rule in which the first mover 1 and the second mover 9 are separated from each other at a given distance or more, in addition to the first rule.

The passage rule is not limited to a rule for passage in the narrow path N. For example, the passage rule may be a rule when the first mover 1 merges into a fairway. FIG. 14 is an image diagram illustrating an example of a target trajectory generated by second trajectory generation when the first mover 1 merges into a fairway. For example, as illustrated in FIG. 14, suppose that in a case where the first mover 1 merges into a fairway P defined in accordance with a custom or a rule, passage rules in which the first mover 1 and the second mover 9 are not present in a merging area at the same time and the first mover 1 and the second mover 9 are separated from each other at a predetermined distance or more are set. In this case, the merging area is set as the danger area A. The restricted area C is set in an area including the danger area A and larger than the danger area A. A warning area D is set in a predetermined area rearward of the merging area in the fairway P. In a case where the first mover 1 enters the restricted area C and the second mover 9 is present in the warning area D, the second trajectory generator 23b generates a target trajectory. In other cases, the first trajectory generator 23a generates a target trajectory. The second trajectory generator 23b expresses rules that the first mover 1 enters the fairway P through the danger area A, that the first mover 1 and the second mover 9 are not present in the danger area A at the same time, and that the first mover 1 and the second mover 9 are separated from each other at a predetermined distance or more, in the form of constraint conditional expressions by using index variables. The second trajectory generator 23b calculates a target trajectory by executing an optimal solution search of a mixed-integer quadratic programming problem that simultaneously optimizes the state quantities of the first mover 1 and the second mover 9 and index variables. Accordingly, the trajectory generator 23 predicts movements of the first mover 1 and the second mover 9, and generates a target trajectory in which the first mover 1 complies with a passage rule in merging in relation to the second mover 9. As a result, the first mover 1 smoothly enters the merging area with adjustment of the velocity and the moving direction such that the first mover 1 enters the merging area after waiting for passage of the second mover 9 through the merging area.

Each actuator is an actuator related to movement of the first mover 1. The actuator 12 is not limited to an electric motor, an engine, and a steering device. For example, in a case where the first mover 1 is a ship, the actuator is a propeller and a thruster, for example. In a case where the first mover 1 is a vehicle, the actuator may be an electric motor, an engine, or a steering device (specifically, an electric motor that adjusts a steering angle). In a case where the first mover 1 is a drone, the actuator is a propeller.

The flowchart is merely an example. The steps in the flowchart may be changed, replaced, added, omitted, or the like as appropriate. Further, the order of steps in the flowchart may be changed or serial processings may be performed in parallel. For example, in a case where the second trajectory generator 23b predicts movement of the second mover 9 while assuming the velocity of the second mover 9 constant, model estimation in step S105 may be omitted.

Functions performed by constitutional elements described herein may be implemented in circuitry or processing circuitry including a general-purpose processor, an application-specific processor, an integrated circuit, an application specific integrated circuit (ASIC), a central processing unit (CPU), conventional circuitry, and/or a combination thereof programmed to perform the functions described herein. A processor includes transistors and other circuits, and is regarded as circuitry or arithmetic circuitry. A processor may be a programmed processor that performs programs stored in a memory.

Circuitry, a unit, and means herein are hardware that is programmed to perform or performs the described functions. The hardware may be any hardware disclosed herein, or any hardware programmed or known to perform the functions described.

If the hardware is a processor considered to be of a type of circuitry, the circuitry, means, or a unit is a combination of hardware and software used to configure the hardware and/or the processor.

The techniques of the present disclosure described above are summarized as follows.

[1] A control system 100 includes; a state acquirer 111 that acquires a state of a first mover 1 and a state of a second mover 9; and a trajectory generator 23 that obtains a target trajectory of the first mover 1, and the trajectory generator 23 obtains the target trajectory of the first mover 1 based on the state of the first mover 1 and the state of the second mover 9 acquired by the state acquirer 111 and a passage rule determined by both the first mover 1 and the second mover 9.

In this configuration, since the passage rule is taken into consideration in generating a target trajectory of the first mover 1, the generated target trajectory is a trajectory in which the first mover 1 complies with the passage rule. That is, the first mover 1 passes while naturally complying with the passage rule without an immediate response such as a sharp turn or a sudden stop by moving along the target trajectory. As a result, the control system 100 allows the first mover 1 to appropriately perform passage in conformity with the passage rule without a sharp turn or a sudden stop, and consequently, can accurately control the first mover 1.

[2] In the control system 100 of [1], the trajectory generator 23 predicts movements of the first mover 1 and the second mover 9, and obtains the target trajectory in which the first mover 1 complies with the passage rule with respect to the movement of the second mover 9.

In this configuration, the trajectory generator 23 predicts movements of the first mover 1 and the second mover 9, and obtains a target trajectory in which the first mover 1 complies with the passage rule, with reference to the predicted movement of the second mover 9. The trajectory generator 23 predicts movements of the first mover 1 and the second mover 9 and generates a target trajectory to thereby enable generation of the target trajectory before the first mover 1 reaches an area to which the passage rule is applied. That is, the control system 100 can adjust the velocity and the moving direction until the first mover 1 reaches the area to which the passage rule is applied, and accordingly, can adjust a timing when the first mover 1 enters this area.

[3] In the control system 100 of [1] or [2], the trajectory generator 23 predicts movement of the second mover 9 based on a dynamic characteristic of the second mover 9.

In this configuration, it is possible to accurately predict movement of the second mover 9. As a result, accuracy of a target trajectory of the first mover 1 is also enhanced.

[4] In the control system 100 of any one of [1] to [3], the trajectory generator 23 calculates the target trajectory by solving an optimizing problem that optimizes an evaluation function based on a deviation between a current position and a target position of the first mover 1 and a control input of the first mover 1, using constraint conditions that the first mover 1 and the second mover 9 move according to predetermined equations of motion and that the first mover 1 and the second mover 9 comply with the passage rule.

In this configuration, specifically, the trajectory generator 23 calculates a target trajectory of the first mover 1 by solving an optimizing problem that optimizes an evaluation function, and in solving the optimizing problem, sets rules that the first mover 1 and the second mover 9 move according to predetermined equations of motion and that the first mover 1 and the second mover 9 comply with the passage rule, as constraint conditions. Accordingly, the trajectory generator 23 can achieve calculation of a target trajectory in which the first mover 1 complies with the passage rule.

[5] In the control system 100 of any one of [1] to [4], the trajectory generator 23 calculates the target trajectory by expressing the passage rule by using an index variable to execute an optimal solution search of a mixed-integer quadratic programming problem that simultaneously optimizes state quantities of the first mover 1 and the second mover 9 and the index variable.

In this configuration, calculation of a target trajectory by the trajectory generator 23 is more specific. That is, the trajectory generator 23 calculates a target trajectory by executing the optimal solution search of the mixed-integer quadratic programming problem. At this time, the trajectory generator 23 expresses a passage rule by using the index variable to thereby take the passage rule into the optimal solution search of the mixed-integer quadratic programming problem. Accordingly, the trajectory generator 23 can achieve calculation of a target trajectory in which the first mover 1 complies with the passage rule.

[6] In the control system 100 of any one of [1] to [5], in calculating the target trajectory, the trajectory generator 23 limits the target trajectory.

In this configuration, the trajectory generator 23 can reduce the amount of calculation in calculating the target trajectory by limiting a search range of the target trajectory. For example, a trajectory in which the first mover 1 shows a nonrealistic behavior cannot be a target trajectory. Thus, the trajectory generator 23 limits the search range of the target trajectory based on a realistic behavior of the first mover 1. Specifically, the trajectory generator 23 limits the search range of a target trajectory to a range in which the number of times of entry of the first mover 1 into the danger area A is only one and the number of times of exit of the first mover 1 from the danger area A is only one. Accordingly, a trajectory in which the first mover 1 enters the danger area A multiple times and exits the danger area A multiple times is excluded from the search for the target trajectory. This reduces the amount of calculation in calculating a target trajectory.

[7] The control system 100 of any one of [1] to [6] further includes a trajectory modifier 24 that modifies the target trajectory obtained by the trajectory generator 23 to a target trajectory in which the first mover 1 avoids an obstacle.

In this configuration, the trajectory modifier 24 modifies the target trajectory obtained by the trajectory generator 23 so that accuracy of the target trajectory can be thereby enhanced. For example, in a case where the trajectory generator 23 calculates a target trajectory by solving the optimizing problem that optimizes the evaluation function described above or calculates a target trajectory by executing the optimal solution search of the mixed-integer quadratic programming problem described above, the trajectory generator 23 obtains a target trajectory by simplifying movement of the first mover 1. That is, the target trajectory obtained by the trajectory generator 23 is a simple target trajectory. Thus, the trajectory modifier 24 modifies the target trajectory obtained by the trajectory generator 23 to a target trajectory in which the first mover 1 avoids an obstacle. The trajectory generator 23 generates a target trajectory mainly for causing the first mover 1 to comply with a passage rule, and the trajectory modifier 24 modifies the target trajectory mainly for causing the first mover 1 to avoid an obstacle. By assigning different roles to the trajectory generator 23 and the trajectory modifier 24, it is possible to accurately generate a target trajectory in which the first mover 1 complies with the passage rule and the first mover 1 avoids an obstacle.

[8] The control system 100 of any one of [1] to [7] further includes a notification controller 29 that notifies a user of the target trajectory through a display 16 or an alarm 17 included in the first mover 1.

In this configuration, a user can know the generated target trajectory. Accordingly, the user accurately knows a driving situation of the first mover 1. For example, when deceleration or other operation of the first mover 1 is performed, the user can know that driving for compliance with the passage rule is being executed.

[9] A control method includes: acquiring a state of a first mover 1; acquiring a state of a second mover 9; and obtaining a target trajectory of the first mover 1, in the obtaining the target trajectory, the target trajectory of the first mover 1 is obtained based on the state of the first mover 1, the state of the second mover 9, and a passage rule determined by both the first mover 1 and the second mover 9.

In this configuration, since the passage rule is taken into consideration in generating a target trajectory of the first mover 1, the generated target trajectory is a trajectory in which the first mover 1 complies with the passage rule. That is, the first mover 1 passes while naturally complying with the passage rule without an immediate response such as a sharp turn or a sudden stop by moving along the target trajectory. As a result, the first mover 1 appropriately performs passage in compliance with the passage rule without a sharp turn or a sudden stop, and consequently, the first mover 1 can be accurately controlled.

[10] The control program 19a causes a control system 100 (computer) to perform the functions of: acquiring a state of a first mover 1; acquiring a state of a second mover 9; and obtaining a target trajectory of the first mover 1, and in the function of obtaining the target trajectory, the target trajectory of the first mover 1 is obtained based on the state of the first mover 1, the state of the second mover 9, and a passage rule determined by both the first mover 1 and the second mover 9.

In this configuration, since the passage rule is taken into consideration in generating a target trajectory of the first mover 1, the generated target trajectory is a trajectory in which the first mover 1 complies with the passage rule. That is, the first mover 1 passes while naturally complying with the passage rule without an immediate response such as a sharp turn or a sudden stop by moving along the target trajectory. As a result, the control system 100 allows the first mover 1 to appropriately perform passage in conformity with the passage rule without a sharp turn or a sudden stop, and consequently, can accurately control the first mover 1.

## Claims

1. A control system comprising:

   a state acquirer that acquires a state of a first mover and a state of a second mover; and
   a trajectory generator that obtains a target trajectory of the first mover, wherein
   the trajectory generator obtains the target trajectory of the first mover based on the state of the first mover and the state of the second mover acquired by the state acquirer and a passage rule determined by both the first mover and the second mover.

2. The control system according to claim 1, wherein
   the trajectory generator predicts movements of the first mover and the second mover, and obtains the target trajectory in which the first mover complies with the passage rule with respect to the movement of the second mover.

3. The control system according to claim 2, wherein
   the trajectory generator predicts movement of the second mover based on a dynamic characteristic of the second mover.

4. The control system according to claim 1, wherein
   the trajectory generator calculates the target trajectory by solving an optimizing problem that optimizes an evaluation function based on a deviation between a current position and a target position of the first mover and a control input of the first mover, using constraint conditions that the first mover and the second mover move according to predetermined equations of motion and that the first mover and the second mover comply with the passage rule.

5. The control system according to claim 4, wherein
   the trajectory generator calculates the target trajectory by expressing the passage rule by using an index variable to execute an optimal solution search of a mixed-integer quadratic programming problem that simultaneously optimizes state quantities of the first mover and the second mover and the index variable.

6. The control system according to claim 4, wherein
   in calculating the target trajectory, the trajectory generator limits a range of searching for the target trajectory.

7. The control system according to claim 4 or 5, further comprising
   a trajectory modifier that modifies the target trajectory obtained by the trajectory generator to a target trajectory in which the first mover avoids an obstacle.

8. The control system according to any one of claims 1 to 6, further comprising
   a notification controller that notifies a user of the target trajectory through a display or an alarm included in the first mover.

9. A control method comprising:

   acquiring a state of a first mover;
   acquiring a state of a second mover; and
   obtaining a target trajectory of the first mover, wherein
   in the obtaining the target trajectory, the target trajectory of the first mover is obtained based on the state of the first mover, the state of the second mover, and a passage rule determined by both the first mover and the second mover.

10. A control program that causes a computer to perform the functions of:

    acquiring a state of a first mover;
    acquiring a state of a second mover; and
    obtaining a target trajectory of the first mover, wherein
    in the function of obtaining the target trajectory, the target trajectory of the first mover is obtained based on the state of the first mover, the state of the second mover, and a passage rule determined by both the first mover and the second mover.

FIG. 1

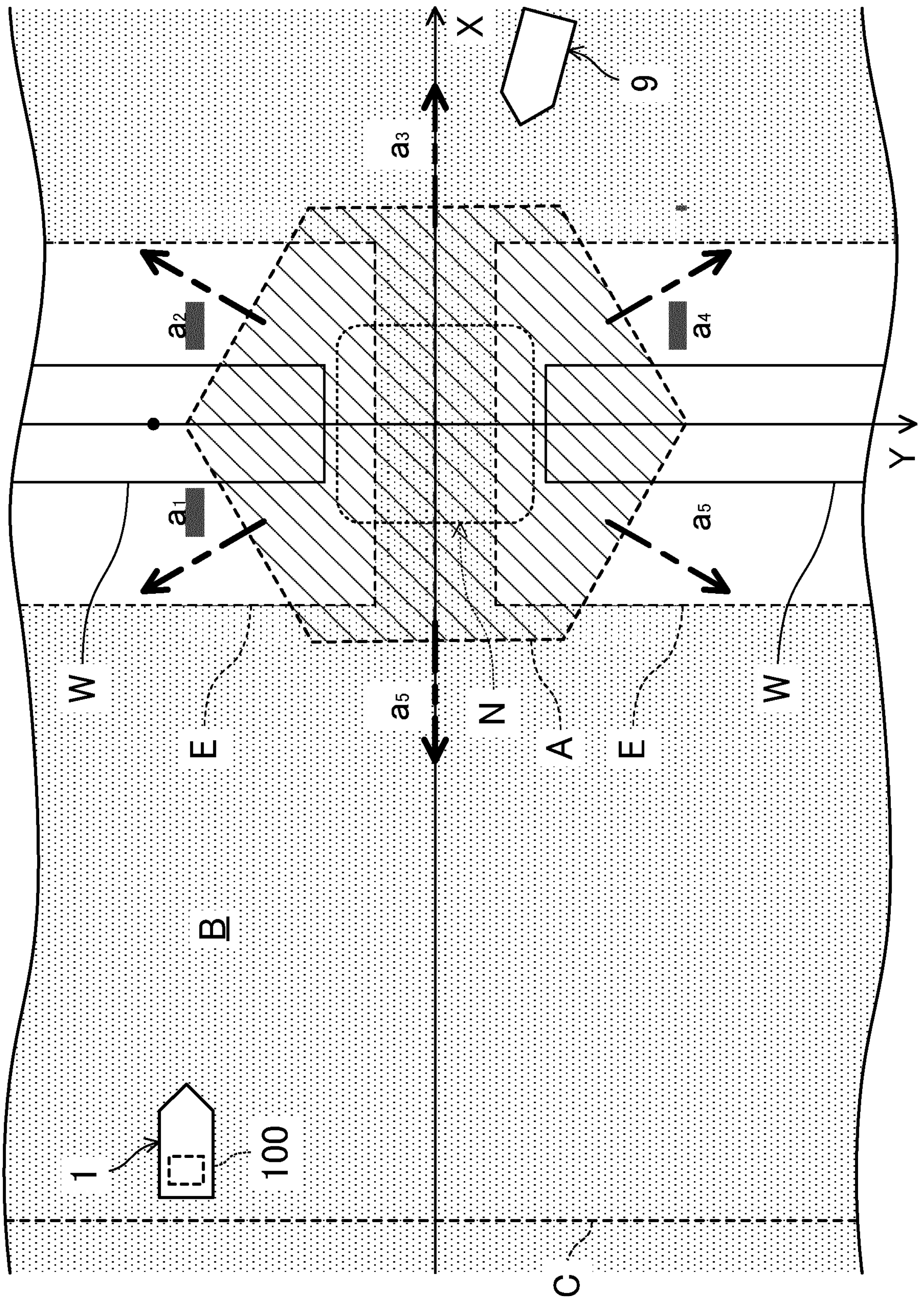

FIG. 2

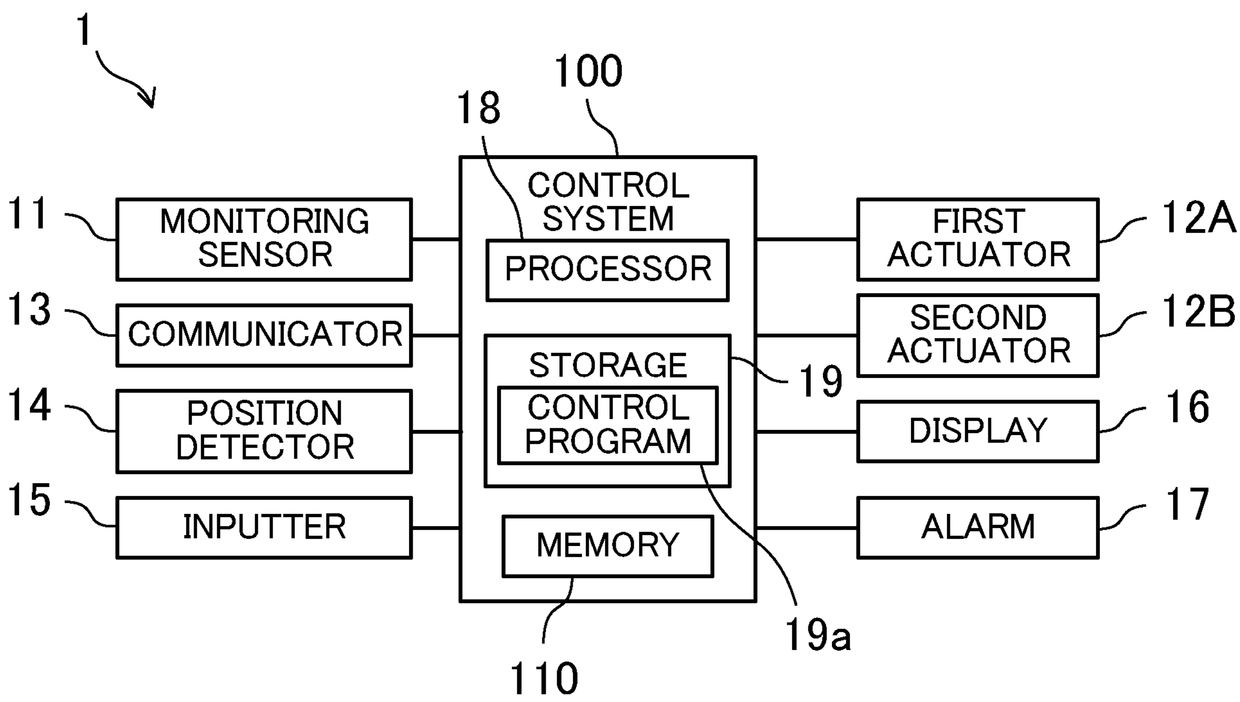
1
100
18
CONTROL SYSTEM
PROCESSOR
STORAGE
CONTROL PROGRAM
MEMORY
11
MONITORING SENSOR
13
COMMUNICATOR
14
POSITION DETECTOR
15
INPUTTER
FIRST ACTUATOR
12A
SECOND ACTUATOR
12B
19
DISPLAY
16
ALARM
17
19a
110

FIG. 3

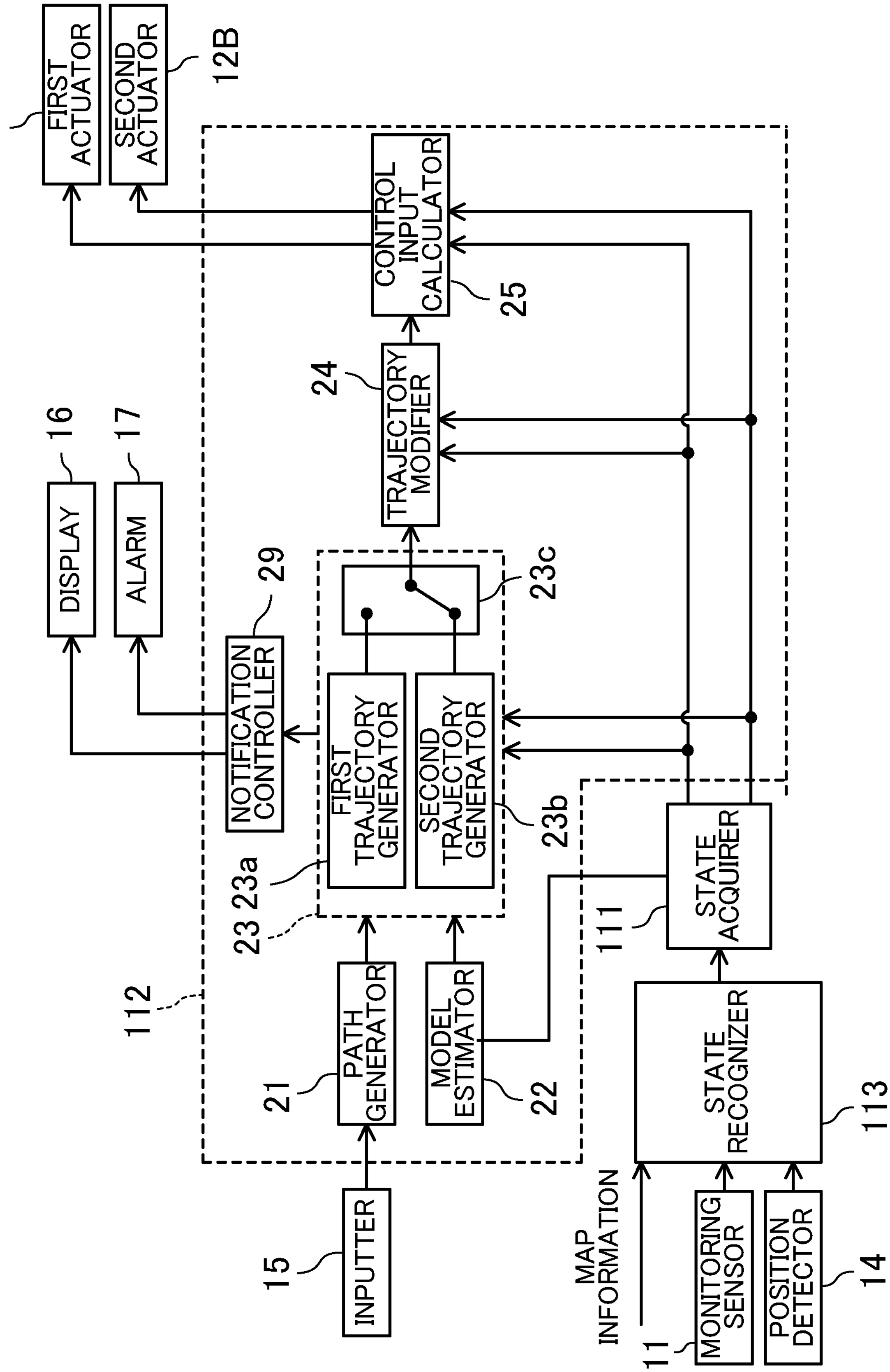
12A
FIRST ACTUATOR
SECOND ACTUATOR
12B
16
17
DISPLAY
ALARM
29
NOTIFICATION CONTROLLER
CONTROL INPUT CALCULATOR
25
24
TRAJECTORY MODIFIER
23c
FIRST TRAJECTORY GENERATOR
SECOND TRAJECTORY GENERATOR
23b
23 23a
112
PATH GENERATOR
MODEL ESTIMATOR
21
22
111
STATE ACQUIRER
STATE RECOGNIZER
113
15
INPUTTER
MAP INFORMATION
11
MONITORING SENSOR
POSITION DETECTOR
14

FIG. 4

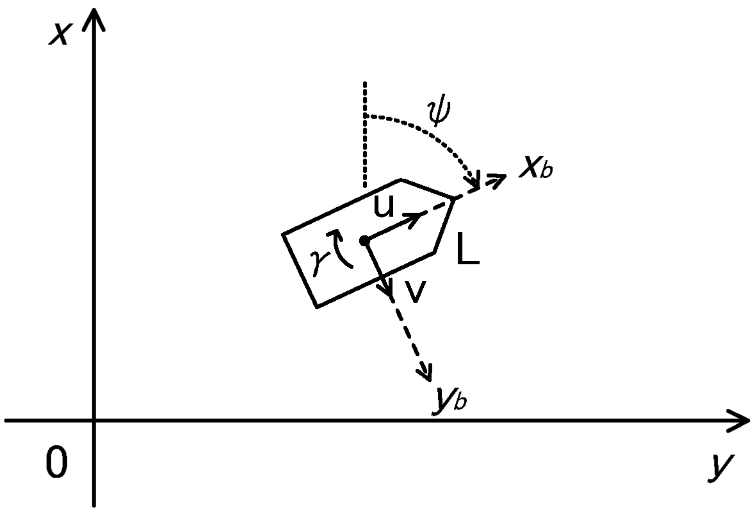


FIG. 5

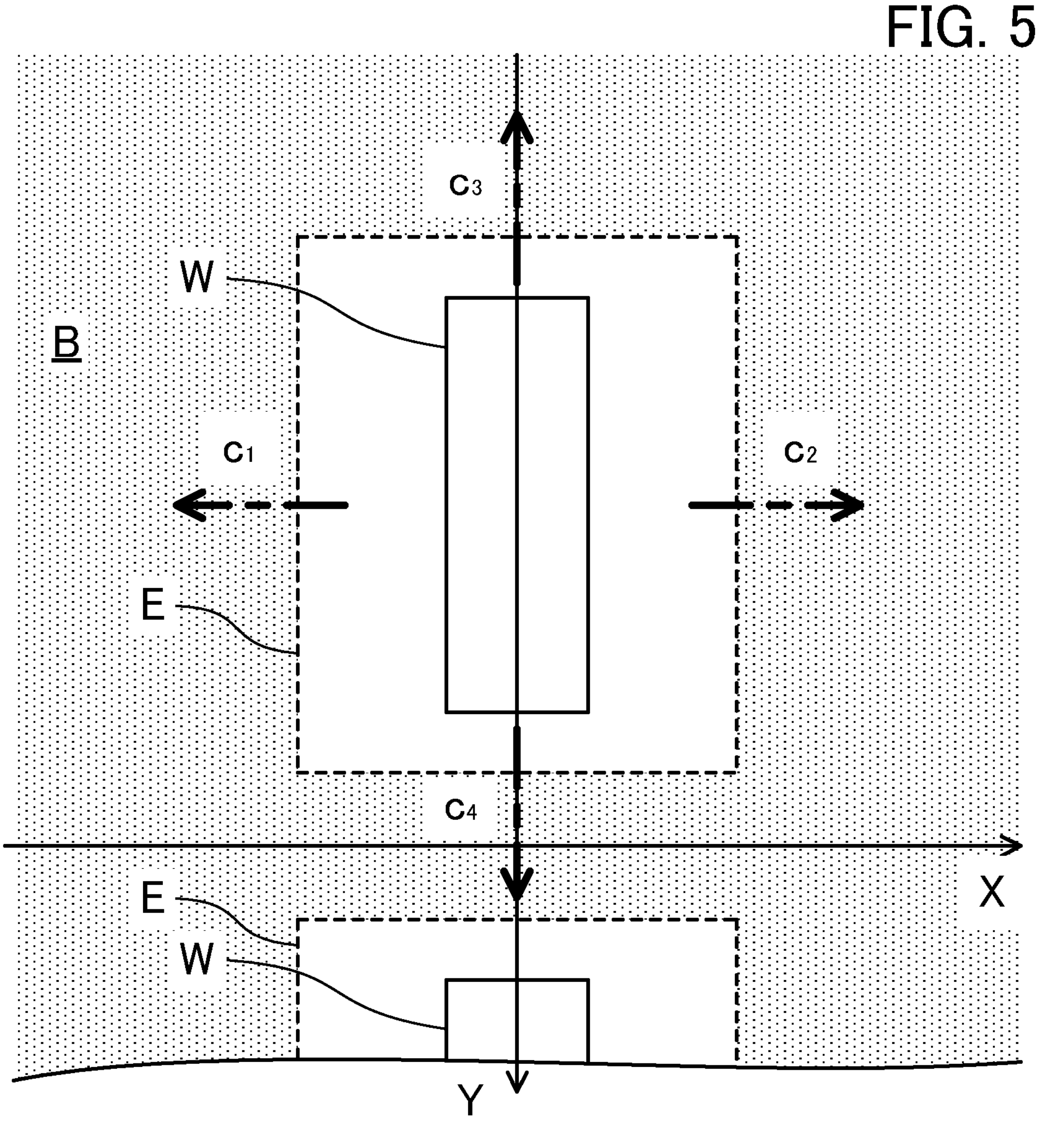

FIG. 6

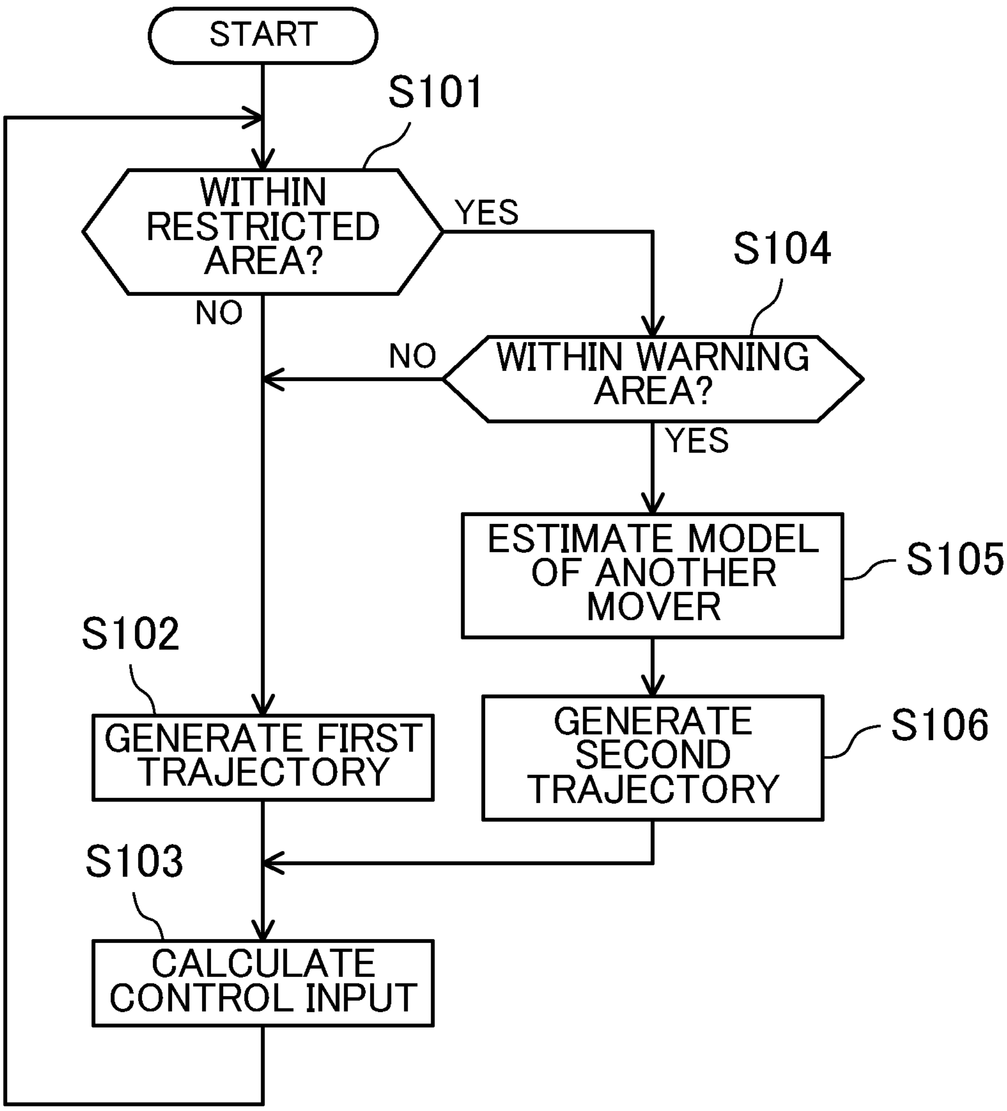
START
S101
WITHIN RESTRICTED AREA?
YES
NO
S104
NO
WITHIN WARNING AREA?
YES
ESTIMATE MODEL OF ANOTHER MOVER
S105
S102
GENERATE FIRST TRAJECTORY
GENERATE SECOND TRAJECTORY
S106
S103
CALCULATE CONTROL INPUT

FIG. 7

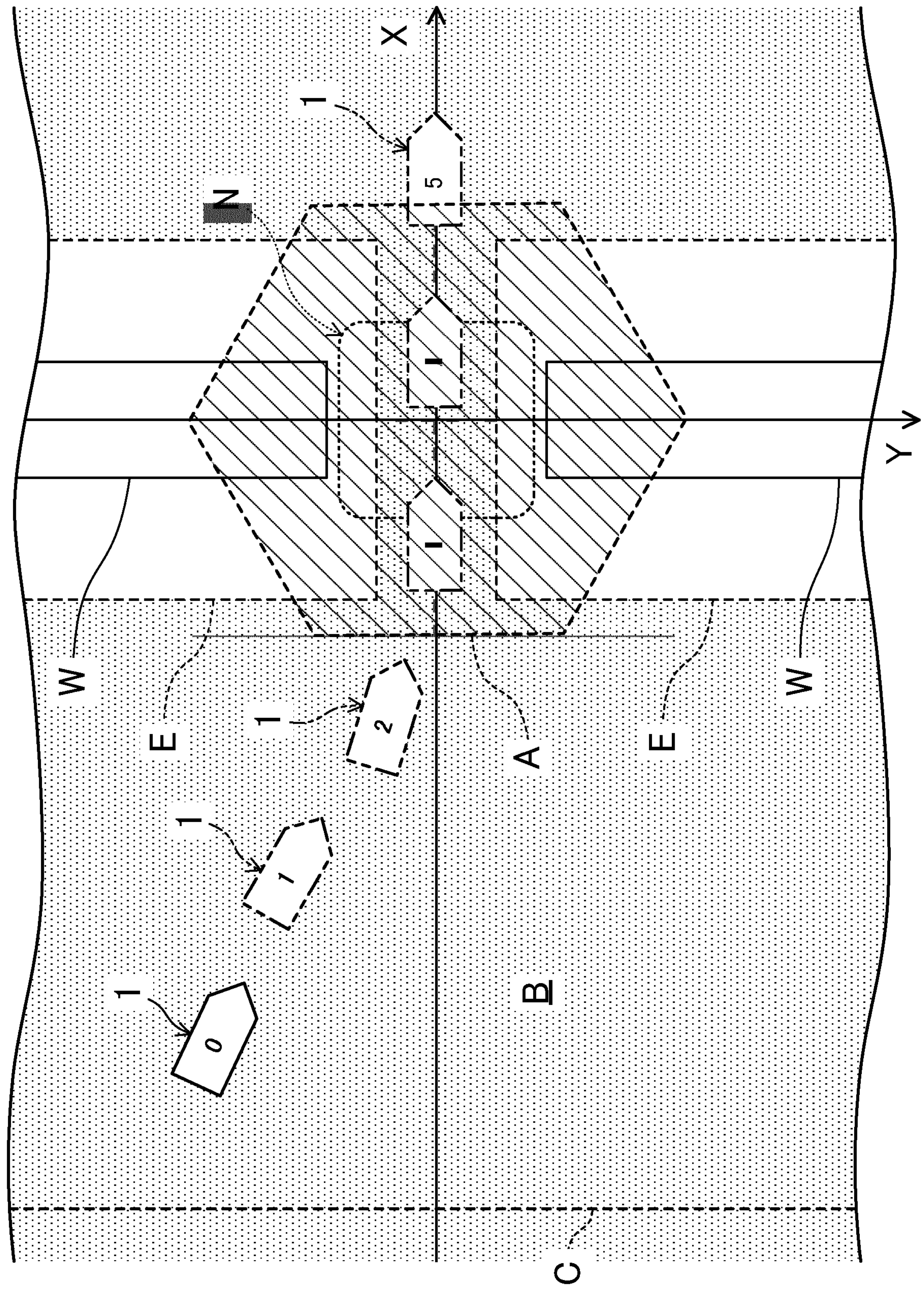

FIG. 8

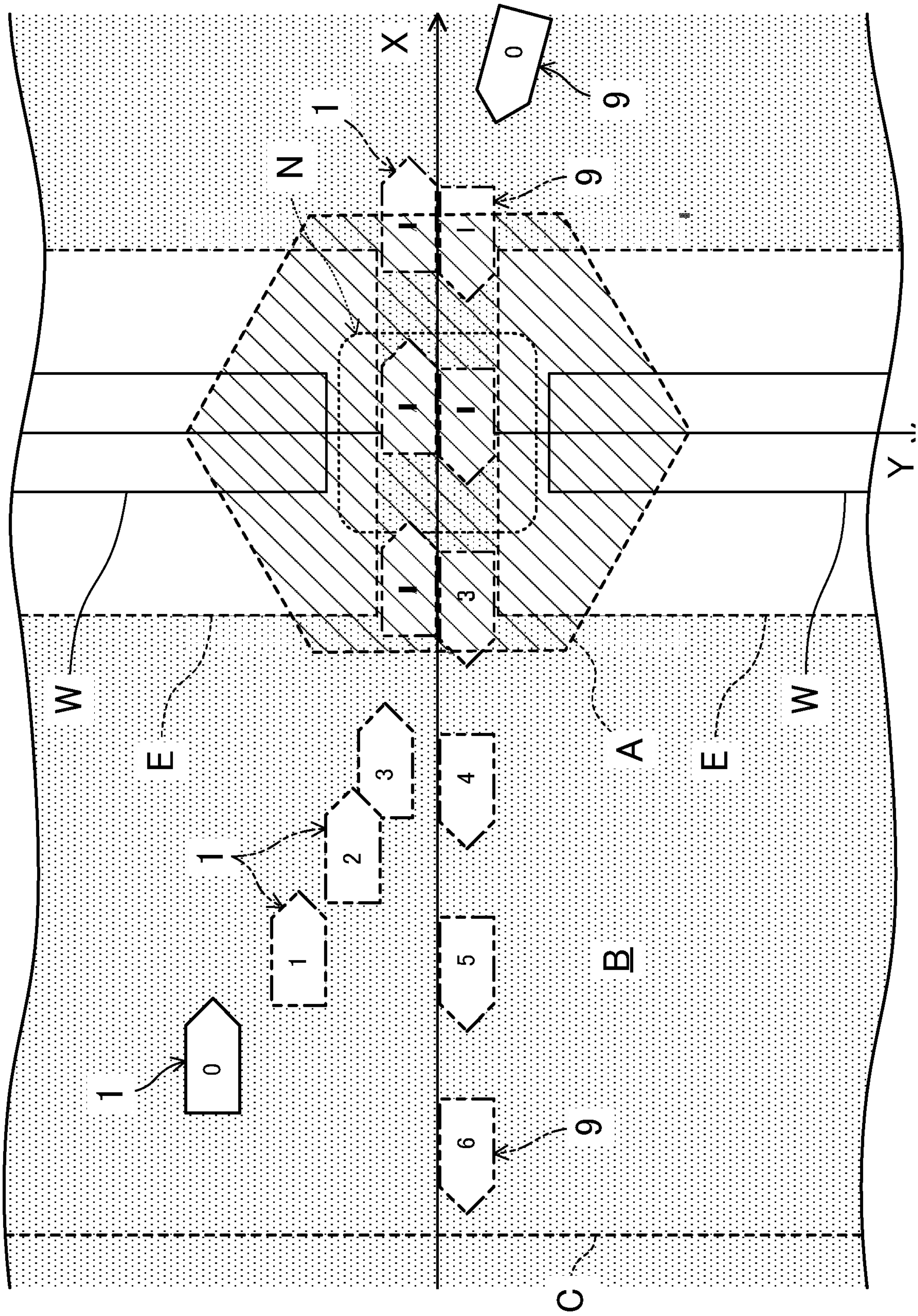

FIG. 9

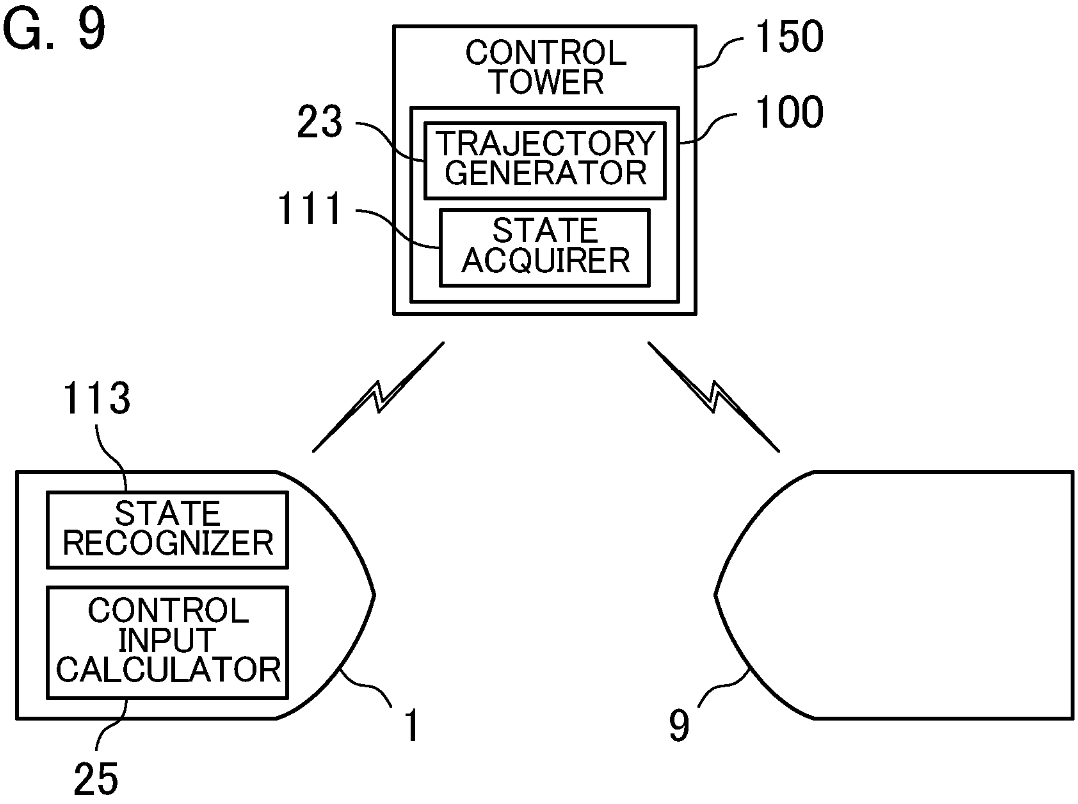
CONTROL TOWER
150
100
23
TRAJECTORY GENERATOR
111
STATE ACQUIRER
113
STATE RECOGNIZER
CONTROL INPUT CALCULATOR
25
1
9

FIG. 10

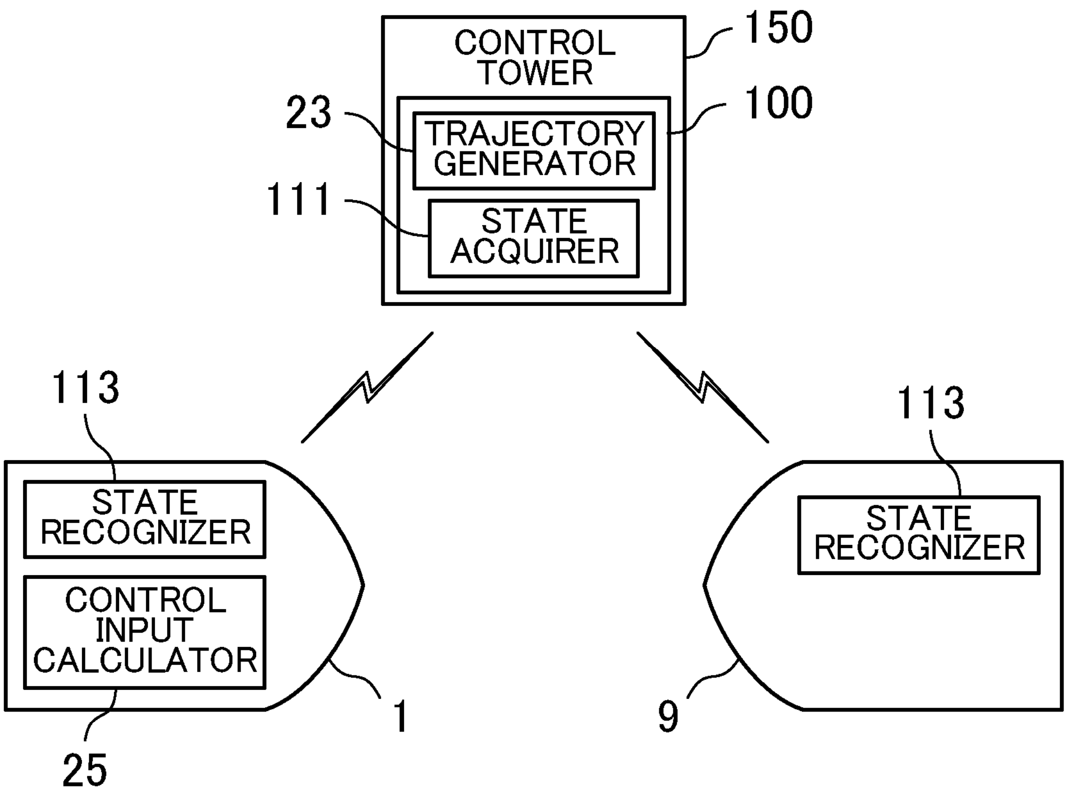
CONTROL TOWER
150
100
23
TRAJECTORY GENERATOR
111
STATE ACQUIRER
113
STATE RECOGNIZER
CONTROL INPUT CALCULATOR
25
1
113
STATE RECOGNIZER
9

FIG. 11

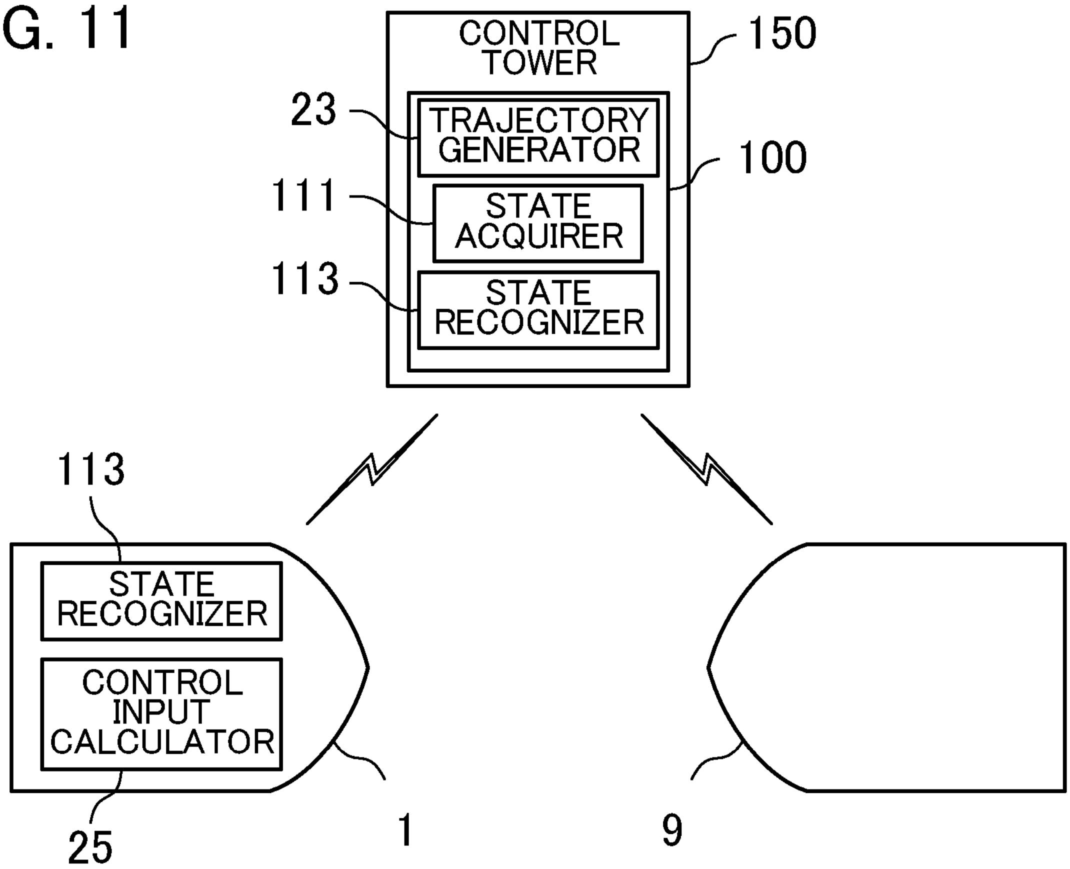
CONTROL TOWER
150
23
TRAJECTORY GENERATOR
100
111
STATE ACQUIRER
113
STATE RECOGNIZER
113
STATE RECOGNIZER
CONTROL INPUT CALCULATOR
25
1
9

FIG. 12

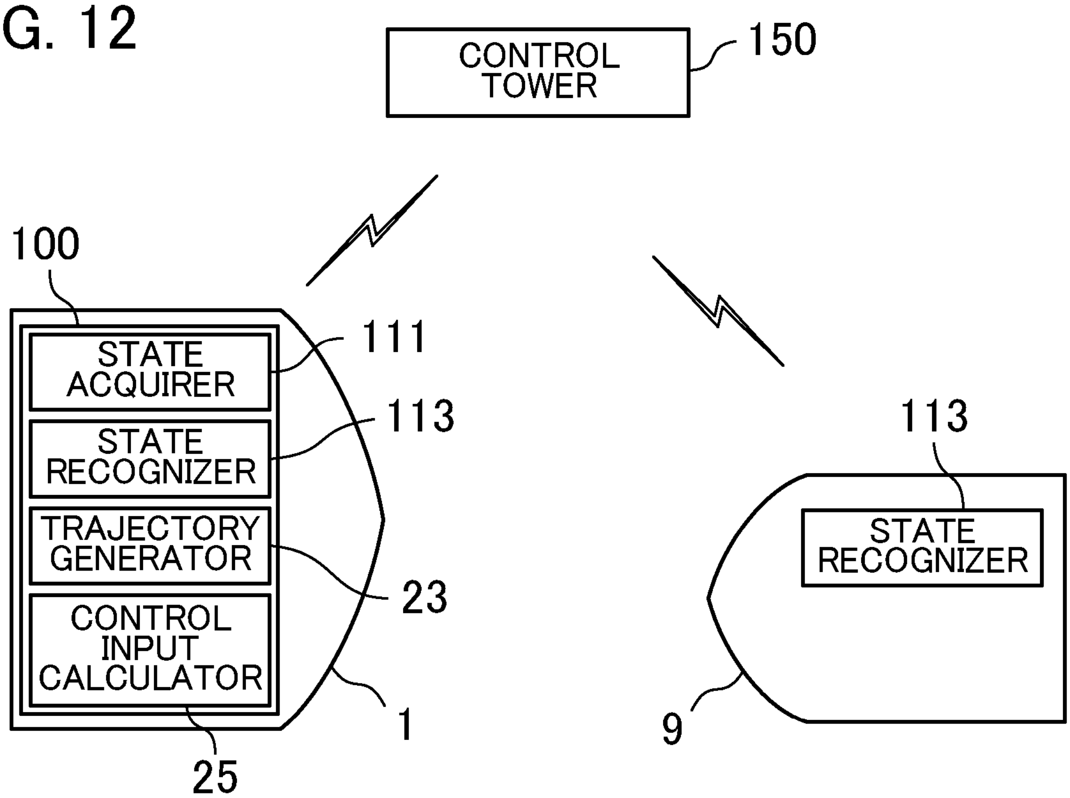
CONTROL TOWER
150
100
STATE ACQUIRER
111
STATE RECOGNIZER
113
TRAJECTORY GENERATOR
23
CONTROL INPUT CALCULATOR
25
1
113
STATE RECOGNIZER
9

FIG. 13

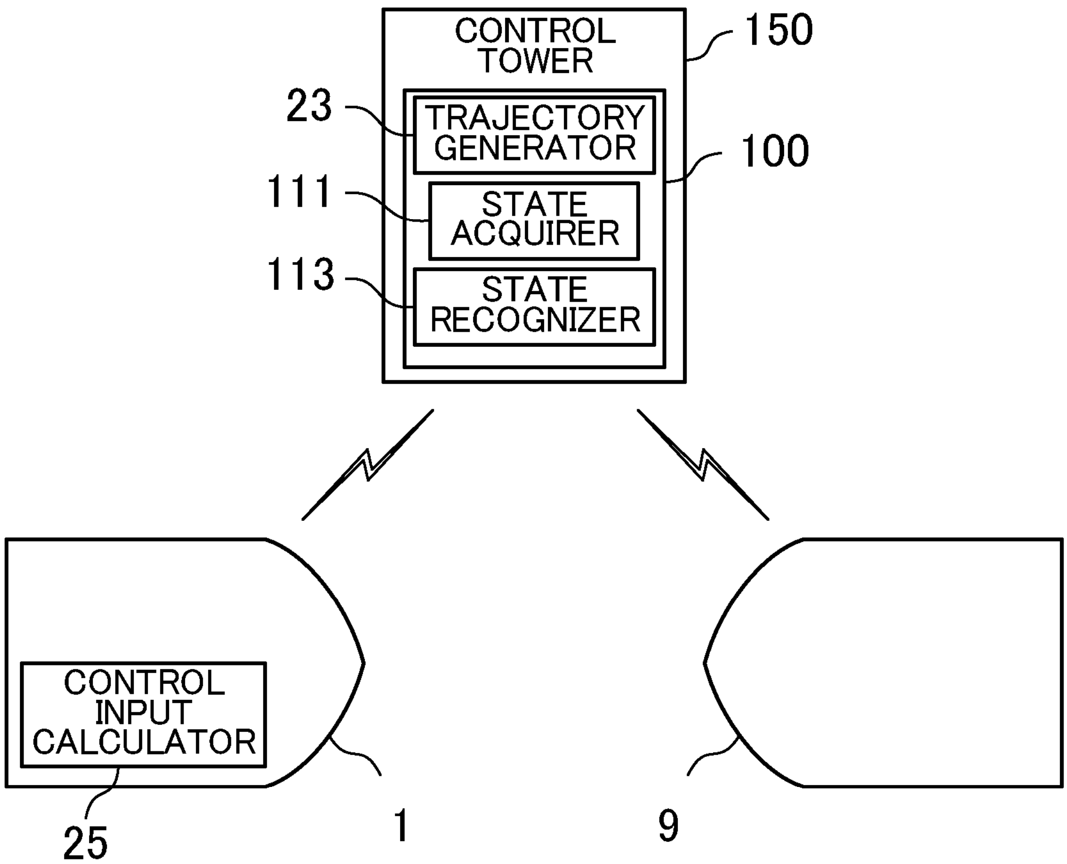
CONTROL TOWER
150
23
TRAJECTORY GENERATOR
100
111
STATE ACQUIRER
113
STATE RECOGNIZER
CONTROL INPUT CALCULATOR
25
1
9

FIG. 14

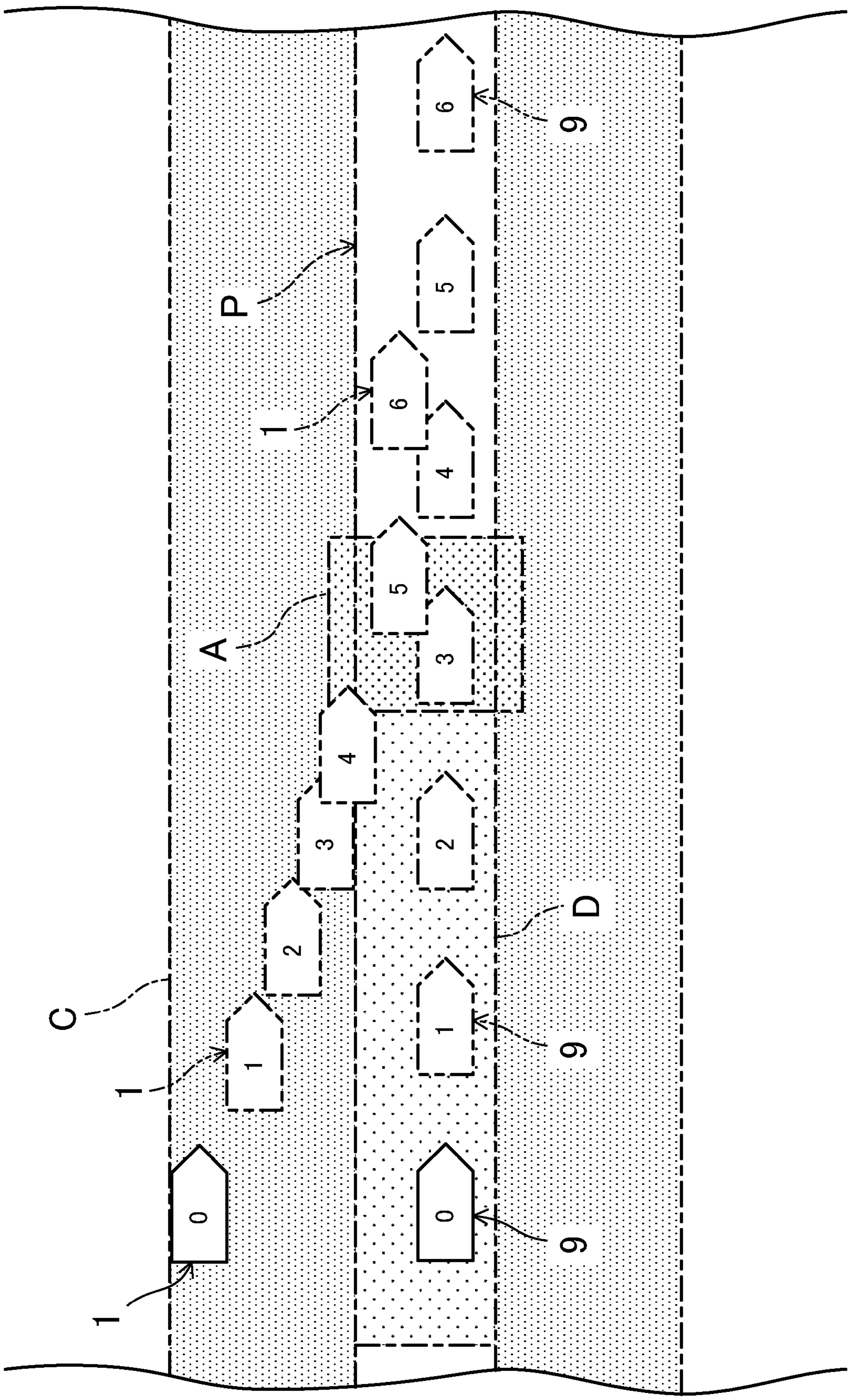

**INTERNATIONAL SEARCH REPORT**

International application No.
**PCT/JP2023/040019**

**A. CLASSIFICATION OF SUBJECT MATTER**

***G05D 1/43***(2024.01)i; ***G05B 13/02***(2006.01)i
FI: G05D1/02 H; G05B13/02 J

According to International Patent Classification (IPC) or to both national classification and IPC

**B. FIELDS SEARCHED**

Minimum documentation searched (classification system followed by classification symbols)

G05D1/43; G05B13/02

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2018-49445 A (NISSAN MOTOR CO., LTD.) 29 March 2018 (2018-03-29)<br>paragraphs [0116]-[0133], fig. 7-8 | 1-3, 8-10<br>4-7 |
| A | JP 2022-523886 A (MITSUBISHI ELECTRIC CORP.) 26 April 2022 (2022-04-26) | 4-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **22 December 2023** | **16 January 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/040019**

| Patent document cited in search report | Publication date (day/month/year) | Patent family member(s) | Publication date (day/month/year) |
|---|---|---|---|
| JP 2018-49445 A | 29 March 2018 | (Family: none) | |
| JP 2022-523886 A | 26 April 2022 | US 2020/0294394 A1<br>WO 2020/183918 A1<br>CN 113811929 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2021060919 A